(19) Europäisches Patentamt
European Patent Office
Office européen des brevets

(11) **EP 3 848 229 B1**

(12) **EUROPÄISCHE PATENTSCHRIFT**

(45) Veröffentlichungstag und Bekanntmachung des Hinweises auf die Patenterteilung:
**08.02.2023 Patentblatt 2023/06**

(21) Anmeldenummer: **20215856.4**

(22) Anmeldetag: **21.12.2020**

(51) Internationale Patentklassifikation (IPC):
**B60L 50/53** (2019.01) **B60L 7/16** (1968.09)

(52) Gemeinsame Patentklassifikation (CPC):
**B60L 50/53; B60L 7/16;** B60L 2200/26;
B60L 2200/36; B60L 2210/10; B60L 2240/12;
B60L 2240/16; B60L 2240/423; B60L 2240/622;
B60L 2240/642; Y02T 10/64; Y02T 10/70;
Y02T 10/72; Y02T 90/16

(54) **VERFAHREN ZUM BETRIEB EINES ELEKTRISCH ANGETRIEBENEN ODER ANTREIBBAREN KRAFTFAHRZEUGS**

METHOD FOR OPERATING AN ELECTRICALLY DRIVEN OR DRIVABLE MOTOR VEHICLE

PROCÉDÉ DE FONCTIONNEMENT D'UN VÉHICULE AUTOMOBILE ENTRAÎNÉ OU POUVANT ÊTRE ENTRAÎNÉ ÉLECTRIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2020 DE 102020200300**

(43) Veröffentlichungstag der Anmeldung:
**14.07.2021 Patentblatt 2021/28**

(73) Patentinhaber: **VOLKSWAGEN AG**
**38440 Wolfsburg (DE)**

(72) Erfinder: **Naumann, Dr. Hardy**
**38442 Wolfsburg (DE)**

(56) Entgegenhaltungen:
**EP-A1- 2 860 057     EP-A1- 3 030 440**
**EP-A1- 3 212 455     EP-B1- 3 030 440**
**EP-B1- 3 036 127     EP-B1- 3 212 455**

**Beschreibung**

Die Erfindung betrifft ein Verfahren zum Betrieb eines elektrisch angetriebenen oder antreibbaren Kraftfahrzeugs aufweisend einen Stromabnehmer zur Kontaktierung mit einer oberhalb einer Fahrbahn verlaufenden Oberleitung, und einen mit dem Stromabnehmer gekoppelten Antriebsstrang. Die Erfindung betrifft weiterhin ein elektrisch angetriebenes oder antreibbares Kraftfahrzeug sowie eine Software auf einem Datenträger.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt.

Unter einem "Laden eines elektrisch oder elektromotorisch angetriebenen oder antreibbaren Kraftfahrzeugs" wird hier und im Folgenden insbesondere das (Auf-)Laden eines solchen sekundären Energiespeichers des Kraftfahrzeugs mit elektrischer Energie verstanden. Nachteiligerweise benötigt ein solcher Ladebetrieb vergleichsweise lange Zeitdauern um den Energiespeicher beziehungsweise die Fahrzeugbatterie elektrisch aufzuladen. Dies bedingt lange Standzeiten oder Fahrtunterbrechungen während der Ladung, wodurch der Benutzerkomfort von Elektro- oder Hybridfahrzeugen insbesondere bei längeren Fahrtstrecken stark reduziert ist.

Zur Vermeidung längerer Haltestopps sind beispielsweise mobile Ladungen des Kraftfahrzeugs denkbar, bei welchen das Kraftfahrzeug während der Fahrt mit elektrischer Energie gespeist wird. Beispielsweise ist eine berührungslose, induktive Ladung mittels in die Fahrbahn integrierten (Lade-)Platten oder (Lade-)Spulen denkbar.

Elektrisch oder elektromotorisch angetriebene oder antreibbare Kraftfahrzeuge, insbesondere Nutzfahrzeuge wie beispielsweise Lastkraftwagen oder Busse, können zur betriebsenergetischen Versorgung und Ladung beispielsweise auch mit einem Stromabnehmer ausgerüstet werden. Der Stromabnehmer stellt hierbei eine elektrisch leitfähige Verbindung zu einem Fahrdraht, einer Stromschiene oder einer anderen, elektrischen Strom führenden Einrichtung her. Für die Elektrifizierung solcher Straßenfahrzeuge ist es beispielsweise denkbar, eine Oberleitung (Luftleitung) als Fahrleitungsanlage oberhalb einer Fahrbahn zu positionieren. Dadurch ist es möglich, dass Fahrzeuge im Bereich dieser Oberleitungen rein elektrisch mittels des Stromabnehmers angetrieben werden. Dadurch ist ein effizienter, ökonomischer und Umwelt schonender Betrieb im Wesentlichen ohne Fahrtunterbrechung auch über längere Fahrtstrecken ermöglicht.

Derartige Kraftfahrzeuge sind beispielsweise im Rahmen eines Batteriebetriebs lediglich mittels der internen Fahrzeugbatterie antreibbar. Im Bereich der Oberleitungen ist es möglich, dass der Stromabnehmer mit der Oberleitung kontaktiert wird. Während eines solchen Oberleitungsbetriebs besteht somit ein galvanischer, also elektrisch leitender, Kontakt zwischen der geerdeten Oberleitung und dem Stromabnehmer. Da solche Straßenfahrzeuge aufgrund der Fahrzeugreifen in der Regel selbst nicht geerdet sind, ist es zum Zwecke einer Betriebssicherheit sowie zum allgemeinen Personenschutz notwendig, dass der Fahrzeugrahmen und/oder ein Fahrzeugaufbau sicher elektrisch von dem Stromabnehmer beziehungsweise der Oberleitung isoliert sind. Bei einem solchen Oberleitungsbetriebs sind typischerweise zwei Betriebsarten, ein sogenannter Wandlerbetrieb und ein sogenannter Bypassbetrieb, vorgesehen.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Unter einem "Wandlerbetrieb" wird hier und im Folgenden insbesondere ein Betrieb verstanden, bei welchem elektrische Energie über einen zwischen dem Stromabnehmer und einem Antriebsstrang geschalteten Gleichspannungswandler (DC-DC-Wandler, DC-Wandler) geführt wird. Der Gleichspannungswandler ist hierbei galvanisch isoliert, so dass ein besonders sicherer, doppelt isolierter Betrieb realisiert ist. Der Gleichspannungswandler weist weiterhin geeigneterweise eine im Vergleich zur Nennleistung eines Fahrzeugantriebs (Traktionsantrieb) geringe Nennleistung auf. Der Wandlerbetrieb weist somit eine vergleichsweise niedrige Leistung auf, so dass der Wandlerbetrieb häufig auch als Niedrigleistungsmodus (engl.: Low Power Mode, LPM) bezeichnet wird.

Der Wandlerbetrieb wird hierbei insbesondere bei einem Anfahren oder bei niedrigen Fahrzeuggeschwindigkeiten verwendet. Bei derartig niedrigen Fahrzeuggeschwindigkeiten besteht ein vergleichsweise hohes Risiko, dass Personen das Kraftfahrzeug berühren, so dass der doppelt isolierte (Wandler-)Betrieb besonders sicher ist.

Unter einem "Bypassbetrieb" wird hier und im Folgenden insbesondere ein Betrieb verstanden, bei welchem der Gleichspannungswandler mittels einer Bypassleitung oder eines Überbrückungsleiters umgangen, und der Fahrzeugantrieb direkt über den Stromabnehmer mit der Oberleitung verbunden wird. Die Bypass- oder Überbrückungsleitung ist hierbei herkömmlicherweise elektrisch parallel zu dem Gleichspannungswandler geschaltet. Dadurch besteht eine galvanische Kopplung des Fahrzeugbordnetzes mit der Betriebserde der Oberleitung. Der Bypassbetrieb wird in der Regel bei höheren Fahrzeuggeschwindigkeiten eingesetzt, da die Gefahr einer Berührung durch Personen bei einem fahrenden Kraftfahrzeug wesentlich geringer ist, so dass ein Betrieb ohne doppelte Isolierung möglich ist. Im Bypassbetrieb ist es möglich, den vollen Leistungsbedarf des fahrzeuginternen Elektromotors aus der Oberleitung decken, der Bypassbetrieb wird daher auch Hochleistungsmodus (engl.: High Power Mode, HPM) bezeichnet.

In der EP 3 036 127 B1 und in der EP 3 212 455 A1 ist jeweils ein Fahrzeug mit einem Stromabnehmer beschrieben. Bei den bekannten Fahrzeugen wird während eines Oberleitungsbetriebs zwischen einem Wandlerbetrieb und einem Bypassbetrieb in Abhängigkeit einer aktuellen Fahrzeuggeschwindigkeit umgeschaltet oder gewechselt.

Während des Wandlerbetriebs und/oder des Bypassbetriebs ist es möglich, dass der Elektromotor des Kraftfahrzeugs im Falle eines (positiven) Beschleunigungsvorgangs motorisch betrieben wird, so dass das notwendige Antriebsmoment über das Drehmoment des Elektromotors erzeugt wird. Im Falle eines Bremsvorgangs, also eines negativen Beschleunigungsvorgangs, wird der Elektromotor in der Regel generatorisch betrieben, so dass elektrische Energie in die Fahrzeugbatterie und/oder die Oberleitung rekuperiert oder zurückgespeist wird. Bei einem Bypassbetrieb wird hierbei die elektrische Energie über den Gleichspannungswandler in die Fahrzeugbatterie und/oder über den Stromabnehmer in die Oberleitung eingespeist.

Wird bei einer Bremsanforderung oder aufgrund des Streckenprofils der Fahrbahn ein negatives Drehmoment, also ein generatorischer Betrieb, von dem Elektromotor gefordert, ist bei einem Bypassbetrieb höchstens die maximale Leistung des Gleichspannungswandlers zur Rekuperation der Elektromotorenleistung in die Fahrzeugbatterie umsetzbar, wobei zusätzlich die Verluste des Gleichspannungswandlers zu berücksichtigen sind. Ein eventuell verfügbarer Leistungsüberschuss des Elektromotors ist beispielsweise in das Oberleitungssystem rückspeisbar.

Die maximale Wandlerleistung des Gleichspannungswandlers beziehungsweise dessen Wandlerverluste wirken somit als eine Begrenzung für das nutzbare Rekuperationspotential des Kraftfahrzeugs. Da der Gleichspannungswandler in der Regel eine niedrige Nennleistung aufweist, wird das Rekuperationspotential während eines Bypassbetriebs häufig nicht optimal oder effektiv ausgenutzt.

Um die Rekuperationsenergie besser zu nutzen ist es beispielsweise denkbar, dass im Falle einer Rekuperation von dem Bypassbetrieb in den Batteriebetrieb gewechselt wird, so dass der Elektromotor die elektrische Energie ohne zwischengeschalteten Gleichspannungswandler direkt in die Fahrzeugbatterie einspeist. Nachteiligerweise erfordert das Umschalten in den Batteriebetrieb (und zurück) Zeit und somit Energie, welche nicht durch den während des Umschaltens im Leerlauf befindlichen Elektromotor zur Verfügung stellbar ist.

Die EP 3 030 440 A1 offenbart ein hybrides Energiesystem für ein Fahrzeug mit einem Stromabnehmer, bei welchem zwischen einem Wandlerbetrieb und einem Bypassbetrieb in Abhängigkeit einer Regeneration umgeschaltet wird.

Der Erfindung liegt die Aufgabe zugrunde, ein besonders geeignetes Verfahren zum Betrieb eines elektrisch angetriebenen oder antreibbaren Kraftfahrzeugs anzugeben. Insbesondere soll ein hinsichtlich der Nutzung von Rekuperationsenergie verbesserter Fahrzeugbetrieb realisiert werden. Der Erfindung liegt weiterhin die Aufgabe zugrunde, ein besonders geeignetes elektrisch angetriebenes oder antreibbares Kraftfahrzeug sowie eine besonders geeignete Software auf einem Datenträger anzugeben.

Hinsichtlich des Verfahrens wird die Aufgabe mit den Merkmalen des Anspruchs 1 und hinsichtlich des Kraftfahrzeugs mit den Merkmalen des Anspruchs 4 sowie hinsichtlich der Software mit den Merkmalen des Anspruchs 5 erfindungsgemäß gelöst. Vorteilhafte Ausgestaltungen und Weiterbildungen sind Gegenstand der Unteransprüche. Die im Hinblick auf das Verfahren angeführten Vorteile und Ausgestaltungen sind sinngemäß auch auf das Kraftfahrzeug und/oder die Software übertragbar und umgekehrt. Sofern nachfolgend Verfahrensschritte beschrieben werden, ergeben sich vorteilhafte Ausgestaltungen für das Kraftfahrzeug und/oder die Software insbesondere dadurch, dass diese(s) ausgebildet ist, einen oder mehrere dieser Verfahrensschritte auszuführen.

Das erfindungsgemäße Verfahren ist zum Betrieb eines elektrisch angetriebenen oder antreibbaren Kraftfahrzeugs, wie beispielsweise eines Elektro- oder Hybridfahrzeugs, vorgesehen sowie dafür geeignet und ausgestaltet. Das erfindungsgemäße ist also ein Betriebsverfahren. Das Kraftfahrzeug ist hierbei vorzugsweise ein Nutzfahrzeug, beispielsweise ein Lastkraftwagen oder ein Bus. Das Kraftfahrzeug ist mit einem Stromabnehmer zur Kontaktierung mit einer oberhalb einer Fahrbahn verlaufenden Oberleitung (engl.: Overhead Contact Line, OCL) als Versorgungsleitung versehen. Das Kraftfahrzeug weist weiterhin einen mit dem Stromabnehmer gekoppelten Antriebsstrang auf. Unter einem Antriebsstrang wird hierbei insbesondere ein elektrisches Antriebssystem des Kraftfahrzeugs verstanden, welches an ein Bordnetz des Kraftfahrzeugs angeschlossen ist. Das Bordnetz ist nachfolgend auch als Hochvoltnetz (HV-Netz) bezeichnet. Der Antriebsstrang weist hierbei insbesondere eine Fahrzeug- oder Traktionsbatterie als elektrochemischen Energiespeicher, sowie einen Elektromotor mit einem Wechselrichter (Inverter) als Antriebs- oder Traktionsmaschine auf.

Erfindungsgemäß wird während eines Fahrbetriebs, bei welchem das Kraftfahrzeug entlang der Fahrbahn fortbewegt wird, insbesondere während eines Oberleitungsbetriebs, bei welchem der Stromabnehmer mit der Oberleitung kontaktiert ist, zwischen einem Wandlerbetrieb und einem Bypassbetrieb in Abhängigkeit einer Fahrzeuggeschwindigkeit und eines berechneten Rekuperationspotentials umgeschaltet oder gewechselt. Mit anderen Worten ist das Kraftfahrzeug während des Oberleitungsbetriebs zwischen dem Wandlerbetrieb und dem Bypassbetrieb umschaltbar. Dies bedeutet, dass im Gegensatz zum Stand der Technik die Umschaltung zwischen Wandler- und Bypassbetrieb nicht lediglich bei einem Über- oder Unterschreiten eines Geschwindigkeitsschwellwerts erfolgt, sondern zusätzlich das Rekuperationspotential der jeweiligen Betriebsart berücksichtigt wird. Dadurch ist ein besonders geeignetes Betriebsverfahren für ein elektrisch angetriebenes oder antreibbares Kraftfahrzeug realisiert.

Ein Kerngedanke der Erfindung liegt insbesondere darin, dass die aktuelle Fahrsituation bewertet und im Sinne einer möglichst optimalen Ausnutzung einer Brems- oder Rekuperationsenergie zwischen den Betriebsarten (Wandlerbetrieb, Bypassbetrieb) umgeschaltet wird. Dadurch ist eine besonders energieoptimierte Betriebsartenkoordination oder Betriebsartenführung realisiert, welche neben der Fahrzeuggeschwindigkeit beziehungsweise einer (festen) Geschwindigkeitsschwelle zusätzlich das jeweilige Rekuperationspotential der beiden Betriebsarten berücksichtigt. Das Rekuperationspotential wird hierbei insbesondere auf Basis einer Vorausschau oder Prognose berechnet.

Unter "Rekuperationspotential" wird hier und im Folgenden insbesondere ein Maß für die voraussichtlich rekuperierbare (Brems-)Energie (Rekuperationsenergie) im Bypass- und/oder Wandlerbetrieb verstanden. Mit anderen Worten wird anhand des berechneten Rekuperationspotentials abgeschätzt, ob sich ein Umschalten von dem Bypassbetrieb in den Wandlerbetrieb oder umgekehrt energetisch lohnt. Es wird also bestimmt, in welcher der Betriebsarten mehr Rekuperationsenergie effektiv nutzbar ist. Hierbei wird insbesondere auch ein Wirkungsgrad des Gleichspannungswandlers, also dessen Verluste, mit berücksichtigt.

Unter "Prognose" oder "prognostizieren" ist hier und im Folgenden insbesondere eine vorausschauende Abschätzung, also eine Prädiktion, zu verstehen, bei welcher anhand eines aktuellen und/oder vergangenen Betriebszustands - gegebenenfalls unter Hinzunahme von mathematischen oder physikalischen Modellen - ein zukünftiger oder zu erwartender Betriebszustand berechnet oder prädiziert wird, welcher mit einer hinreichenden Wahrscheinlichkeit auftritt. Welche Wahrscheinlichkeit hierbei als hinreichend gilt und wie groß die Wahrscheinlichkeit konkret ist, ist dabei zunächst nebensächlich. Dies lässt sich beispielsweise aus vergangenen Fahrdaten oder aus entsprechenden Versuchen oder Erprobungen ermitteln. Für unterschiedliche Kraftfahrzeuge, Betriebs- und Umgebungsbedingungen oder Anwendungsszenarien ergeben sich unter Umständen unterschiedliche prognostizierte Betriebszustände.

Das spezielle Umschalten vom Bypassbetrieb in den Wandlerbetrieb und umgekehrt abhängig von der Fahrzeuggeschwindigkeit und dem Rekuperationspotential ist grundsätzlich zunächst unabhängig von der konkreten Verschaltung der diversen beteiligten Komponenten. Wesentlich ist zunächst allein, dass das Umschalten unter zusätzlicher Berücksichtigung des berechneten oder prognostizierten Rekuperationspotentials erfolgt.

Der Wandlerbetrieb und der Bypassbetrieb schließen sich gegenseitig aus. Sowohl im Wandlerbetrieb als auch im Bypassbetrieb ist der Antriebsstrang über die Oberleitung mit Energie versorgt oder versorgbar. Der Wandlerbetrieb und der Bypassbetrieb unterscheiden sich jedoch - wie nachfolgend erläutert - in der konkreten Anbindung des Antriebsstrangs an die Oberleitung.

Im Wandlerbetrieb, nachfolgend auch Niedrigleistungsbetrieb oder Niedrigleistungsmodus (engl.: Low Power Mode, LPM) genannt, ist der Stromabnehmer über einen Gleichspannungswandler mit dem Antriebsstrang elektrisch verbunden. Insgesamt ergibt sich demnach ein Strompfad von der Oberleitung über den Stromabnehmer und den Gleichspannungswandler in den Antriebsstrang.

Während des Wandlerbetriebs wird elektrische Energie zwischen dem Antriebsstrang und der Oberleitung über den Gleichspannungswandler geführt. Dies bedeutet, dass bei einem motorischen Betrieb des Elektromotors elektrische Energie aus der Oberleitung über den Gleichspannungswandler und den Wechselrichter in den Elektromotor eingespeist wird. Im Falle eines generatorischen oder rekuperativen Betriebs wird die vom Elektromotor erzeugte elektrische Energie über den Wechselrichter in die Fahrzeugbatterie eingespeist. Bei einer im Wesentlichen vollständig geladenen Fahrzeugbatterie wird die Rekuperationsenergie über den Wechselrichter und den Gleichspannungswandler mittels des Stromabnehmers in die Oberleitung rückgespeist.

Bevorzugterweise ist der Gleichspannungswandler isolierend ausgebildet, so dass der Antriebsstrang und die Oberleitung im Wandlerbetrieb galvanisch voneinander getrennt sind. Dadurch ist im Wandlerbetrieb vorteilhaft auf einfache Weise eine doppelte Isolierung des Fahrgestells gegenüber der Oberleitung bei lediglich einfacher Isolierung des Antriebsstrangs gegenüber dem Fahrgestell realisiert. Ein isolierender Gleichspannungswandler zeichnet sich dadurch aus, dass dieser eine Eingangsseite und eine Ausgangsseite aufweist, welche voneinander galvanisch getrennt sind. Insbesondere ist durch den Gleichspannungswandler im Wandlerbetrieb auch eine galvanische Trennung der Oberleitung einerseits und andererseits des Bordnetzes sowie sämtlicher daran angeschlossener Komponenten realisiert oder realisierbar.

Im Bypassbetrieb, nachfolgend auch Hochleistungsbetrieb oder Hochleistungsmodus (engl.: High Power Mode, HPM) genannt, sind dagegen der Antriebsstrang und die Oberleitung zur Umgehung des Gleichspannungswandlers über eine Bypassleitung oder Umgehungsleitung elektrisch miteinander verbunden. Die Bypassleitung ist hierbei elektrisch parallel zu dem Gleichspannungswandler geschaltet. Insgesamt ergibt sich demnach ein Strompfad von der Oberleitung über den Stromabnehmer und die Bypassleitung in den Antriebsstrang.

Während des Bypassbetriebs wird elektrische Energie über die Bypassleitung geführt. Dies bedeutet, dass bei einem motorischen Betrieb des Elektromotors elektrische Energie aus der Oberleitung über die Bypassleitung direkt in den Wechselrichter und somit in den Elektromotor eingespeist wird. Im Falle eines generatorischen oder rekuperativen Betriebs wird die vom Elektromotor erzeugte elektrische Energie (Rekuperationsenergie) über den Wechselrichter und den Gleichspannungswandler in die Fahrzeugbatterie eingespeist. Bei einer im Wesentlichen vollständig geladenen Fahrzeugbatterie wird die Rekuperationsenergie über den Wechselrichter mittels des Stromabnehmers in die Oberleitung rückgespeist.

Allgemein unterscheiden sich der Wandlerbetrieb und der Bypassbetrieb insbesondere dadurch, dass im Wandlerbetrieb alle Komponenten, welche mit der Oberleitung galvanisch verbunden sind, gegenüber einem Fahrgestell des Kraftfahrzeugs, beispielsweise gegenüber einem Fahrzeugrahmen und/oder einem Fahrzeugaufbau, doppelt isoliert sind, wohingegen im Bypassbetrieb der Antriebsstrang mit der Oberleitung galvanisch verbunden ist, dabei jedoch nicht doppelt, sondern lediglich einfach gegen das Fahrgestell isoliert ist.

Der Wandlerbetrieb ist somit in elektrischer Hinsicht sicherer als der Bypassbetrieb. Der Bypassbetrieb ist hingegen kostengünstiger umsetzbar und konstruktiv weniger aufwendig als der Wandlerbetrieb und unter Umständen auch effizienter. Die Aktivierung des Bypassbetriebs erfordert somit eine besondere Begründung, welche eine schlechtere Sicherheit hinsichtlich der Isolierung rechtfertigt. Hierbei wird einerseits auf die Geschwindigkeit des Elektrofahrzeugs abgestellt, denn mit größerer Geschwindigkeit ist eine Berührung bei gleichzeitiger Erdung unwahrscheinlicher und wird zudem gegenüber einer zunehmenden mechanischen Gefährdung auch zunehmend irrelevant. Vorliegend ist die Freigabe des Bypassbetriebs zusätzlich auch abhängig von dem Rekuperationspotential. Dadurch erfolgt das Umschalten oder Wechseln zwischen den Betriebsarten nicht lediglich geschwindigkeitsabhängig sondern zusätzlich auch unter Berücksichtigung der zu erwartenden Rekuperationsenergie.

Ein wesentlicher Vorteil der Erfindung besteht somit insbesondere darin, dass ein besonders hoher Wirkungsgrad bei der Bremsrekuperation ermöglicht ist, welcher sich positiv auf eine Kohlenstoffdioxid-Bilanz ($CO_2$-Bilanz) des Kraftfahrzeugs überträgt.

Das Kraftfahrzeug bewegt sich im Fahrbetrieb auf der Fahrbahn und weist eine Bereifung auf, welche mit der Fahrbahn in Kontakt steht. Aufgrund der Bereifung ergibt sich zwischen dem Kraftfahrzeug und der Fahrbahn insbesondere eine nicht geerdete, undefinierte elektrische Verbindung. Einerseits ist die Bereifung vorzugsweise isolierend, andererseits sind auch Ausgestaltungen möglich und geeignet, bei welchen die Bereifung im Wesentlichen isolierend ist und dabei eine gewisse Leitfähigkeit derart aufweist, dass eine statische Aufladung minimiert wird.

Oberhalb der Fahrbahn ist eine ortsfeste Oberleitung angeordnet. Die Oberleitung ist insbesondere eine Hochvoltleitung oder kurz HV-Leitung. Die Oberleitung ist insbesondere einpolig geerdet ausgeführt. Zur Vermeidung von ungewünschten Kollisionen sind Oberleitungen vorzugsweise in einer gewissen Mindesthöhe, beispielsweise 5 m (Meter), oberhalb der Fahrbahn angeordnet.

Erfindungsgemäß wird von dem Wandlerbetrieb auf den Bypassbetrieb umgeschaltet, wenn die Fahrzeuggeschwindigkeit größer als ein erster Geschwindigkeitsschwellwert ist, und wenn das Rekuperationspotential für den Bypassbetrieb energetisch günstiger als für den Wandlerbetrieb ist. Mit anderen Worten erfolgt die Umschaltung oder der Wechsel von dem Wandlerbetrieb auf den Bypassbetrieb wenn der erste Geschwindigkeitsschwellwert überschritten wird, und wenn mehr Rekuperationsenergie für den Bypassbetrieb als für den Wandlerbetrieb prognostiziert oder geschätzt wird. Hinsichtlich der Bedingungen wird somit kumulativ umgeschaltet, die Bedingungen müssen also gemeinsam oder gleichzeitig vorliegen. Es wird also lediglich auf den Bypassbetrieb umgeschaltet wenn die Fahrzeuggeschwindigkeit ausreichend hoch ist, und wenn es hinsichtlich der erwarteten Rekuperationsenergie vorteilhaft ist.

Erfindungsgemäß wird von dem Bypassbetrieb auf den Wandlerbetrieb umgeschaltet, wenn die Fahrzeuggeschwindigkeit kleiner als ein zweiter Geschwindigkeitsschwellwert ist, oder wenn das Rekuperationspotential für den Wandlerbetrieb energetisch günstiger als für den Bypassbetrieb ist. Mit anderen Worten erfolgt die Umschaltung oder der Wechsel von dem Bypassbetrieb auf den Wandlerbetrieb, wenn der zweite Geschwindigkeitsschwellwert unterschritten wird, oder wenn mehr Rekuperationsenergie für den Wandlerbetrieb als für den Bypassbetrieb prognostiziert oder geschätzt wird. Hinsichtlich der Bedingungen wird somit distinktiv umgeschaltet, also wenn bereits eine der Bedingungen vorliegt. Es wird also auf den Wandlerbetrieb umgeschaltet, wenn die Fahrzeuggeschwindigkeit niedrig ist, oder wenn es hinsichtlich der erwarteten Rekuperationsenergie vorteilhaft ist.

Der erste Geschwindigkeitsschwellwert und der zweite Geschwindigkeitsschwellwert sind hierbei beispielsweise gleich dimensioniert. Mit anderen Worten sind die Geschwindigkeitsschwellwerte für das Umschalten von dem Wandlerbetrieb auf den Bypassbetrieb und für das Umschalten von dem Bypassbetrieb auf den Wandlerbetrieb beispielsweise gleich. Zweckmäßigerweise ist jedoch eine gewisse (Geschwindigkeits-)Hysterese vorgesehen, so dass die Geschwindigkeitsschwelle für das Umschalten von dem Wandlerbetrieb auf den Bypassbetrieb höher als die Geschwindigkeitsschwelle für das Umschalten von dem Bypassbetrieb auf den Wandlerbetrieb dimensioniert ist. Dies bedeutet, dass der erste Geschwindigkeitsschwellwert größer als der zweite Geschwindigkeitsschwellwert ist. Dadurch ist hinsichtlich der fahrzeuggeschwindigkeitsabhängigen (Umschalt-)Bedingung eine gewisse Bagatellgrenze gegeben. Dadurch wird ein zu häufiges, nicht effizientes Umschalten unterdrückt.

Erfindungsgemäß wird das Rekuperationspotential anhand eines Drehmoments eines Elektromotors des Antriebsstrangs berechnet. Das Drehmoment ist hierbei beispielsweise ein prognostiziertes Soll-Drehmoment. Positive (Soll-)Drehmomente des Antriebsstrangs beziehungsweise Elektromotors entsprechen einer Beschleunigung, also einem motorischen Betrieb, wobei negative (Soll-)Drehmomente einem Bremsvorgang, also einem generatorischen Betrieb, entsprechen. Dadurch ist in einfacher und zweckmäßiger Art und Weise bestimmbar, ob und in welchem Umfang eine Rekuperation von Bremsenergie zu erwarten ist. Somit ist anhand des (Soll)Drehmoments eine besonders zuverlässige Prognose oder Abschätzung der zu erwartenden Rekuperationsenergie ermöglicht.

Erfindungsgemäß wird anhand einer Fahrprofilvorausschau ein Maß für das (Soll-)Drehmoment bestimmt oder prognostiziert. Dadurch ist eine geeignete Bestimmung des (Soll-)Drehmoments realisiert, wodurch eine zuverlässige Bestimmung oder Berechnung des zu erwartenden Rekuperationspotentials ermöglicht ist.

In einer zweckmäßigen Weiterbildung wird die Fahrprofilvorausschau anhand von Navigationsdaten und/oder Fahrzeugdaten und/oder Verkehrsdaten bestimmt. Unter der Fahrprofilvorausschau ist ein geschätztes oder prognostiziertes zukünftiges Fahrprofil, also eine Streckenund/oder Fahrmanövervorausschau, insbesondere prädizierte Beschleunigungs- und/oder Bremsvorgänge, zu verstehen. Dadurch ist eine besonders geeignete Bestimmung des (Soll)Drehmoments realisiert, wodurch in der Folge eine besonders zuverlässige Bestimmung oder Berechnung des zu erwartenden Rekuperationspotentials ermöglicht ist.

Unter dem Begriff "Navigationsdaten" sind hierbei insbesondere Daten eines Navigationsgeräts, wie beispielsweise GPS-Daten (Global Positioning System), also eine Soll-Route oder Soll-Fahrtrajektorie beispielsweise mit Fahrzeuggeschwindigkeit und/oder Fahrbahnsteigungen, zu verstehen. Der Begriff "Fahrzeugdaten" bezeichnet insbesondere physikalische Betriebszustandsgrößen des Kraftfahrzeugs während des Fahrbetriebs, wie beispielsweise Fahrwiderstände und/oder Beschleunigungswiderstände). Der Begriff "Verkehrsdaten" beschreibt hierbei beispielsweise insbesondere einen Abstand zu einem vorausfahrenden Fahrzeug, eine zulässige Höchstgeschwindigkeit (Geschwindigkeitsbegrenzung), oder eine Fahrzeuggeschwindigkeit eines vorausfahrenden Fahrzeugs sowie des fließenden Verkehrs. Anhand dieser (Betriebszustands-)Daten wird die entsprechende Soll-Größe für den Antriebsstrang, beispielsweise eine (Soll-)Fahrstufe oder das (Soll-)Drehmoment, sowie die sich daraus ergebenden aktuellen Ist-Größen, wie beispielsweise die (Ist-)Fahrzeuggeschwindigkeit oder die (Ist-)Drehzahl des Elektromotors, bestimmt oder berechnet.

Erfindungsgemäß werden im Falle eines negativen (Soll-)Drehmoments ein erster Energiewert für den Wandlerbetrieb und ein zweiter Energiewert für den Bypassbetrieb bestimmt. Die bestimmten Energiewerte werden anschließend miteinander verglichen. Das prognostizierte oder prädizierte (Soll-)Drehmoment ist ein Maß für zukünftige Beschleunigungs- und Bremsvorgänge, insbesondere sind negative (Soll-)Drehmomente indikativ für zukünftige Bremsvorgänge, also für zu erwartende Rekuperationsvorgänge. Dies bedeutet, dass der erste Energiewert einer zu erwartenden Rekuperationsenergie für den Wandlerbetrieb, und der zweite Energiewert einer zu erwartenden Rekuperationsenergie für den Bypassbetrieb entspricht. Das Rekuperationspotential wird hierbei anhand eines Vergleichs der Rekuperationsenergien bestimmt. Es wird also bestimmt, welche der Betriebsarten im Hinblick auf die Rekuperation energetisch sinnvoller oder vorteilhafter ist.

In einer bevorzugten Ausgestaltung wird bei dem Vergleich der Energiewerte ein Wert für eine Energiehysterese berücksichtigt, um ein zu häufiges Umschalten zwischen den Betriebsarten zu unterdrücken.

Die Ausführungen im Zusammenhang mit dem vorstehend beschriebenen Verfahren gelten sinngemäß auch für das nachfolgend beschriebene Kraftfahrzeug und umgekehrt.

Das erfindungsgemäße elektrisch angetriebene oder antreibbare Kraftfahrzeug ist beispielsweise als ein Elektro- oder Hybridfahrzeug, insbesondere als ein Elektro- oder Hybridlastkraftwagen, ausgeführt. Das Kraftfahrzeug weist einen Stromabnehmer zur Kontaktierung mit einer oberhalb einer Fahrbahn verlaufenden Oberleitung, und einen mit dem Stromabnehmer gekoppelten Antriebsstrang auf.

Zwischen den Stromabnehmer und den Antriebsstrang sind einerseits ein Gleichspannungswandler und andererseits eine parallel zum Gleichspannungswandler verlaufende Bypassleitung angeordnet. Die elektrische Verbindung zwischen dem Stromabnehmer und dem Antriebsstrang ist hierbei zwischen dem Gleichspannungswandler und der Bypassleitung umschaltbar oder wechselbar. Mit anderen Worten verläuft der Strompfad zwischen dem Stromabnehmer und dem Antriebsstrang entweder über den Gleichspannungswandler oder über die Bypassleitung.

Das Kraftfahrzeug weist weiterhin einen Controller (das heisst eine Steuereinheit) auf.

Der Controller ist hierbei allgemein - programm- und/oder schaltungstechnisch - zur Durchführung des vorstehend beschriebenen erfindungsgemäßen Verfahrens eingerichtet. Der Controller ist somit konkret dazu eingerichtet, während eines Oberleitungsbetriebs, bei welchem der Stromabnehmer mit der Oberleitung kontaktiert ist, zwischen einem Wandlerbetrieb und einem Bypassbetrieb in Abhängigkeit einer Fahrzeuggeschwindigkeit, insbesondere einer aktuellen Ist-Fahrzeuggeschwindigkeit, und eines berechneten Rekuperationspotentials umzuschalten. Mit anderen Worten ist der Controller dazu geeignet und eingerichtet den Strompfad zwischen dem Stromabnehmer und dem Antriebsstrang in Abhängigkeit der Fahrzeuggeschwindigkeit und des Rekuperationspotentials zwischen dem Gleichspannungswandler und der Bypassleitung umzuschalten oder zu wechseln.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Fahrzeugnutzer - bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC), gebildet sein, in dem die Funktionalität zur Durchführung des erfindungsgemäßen Verfahrens mit schaltungstechnischen Mitteln implementiert ist.

Der Antriebsstrang weist in einer zweckmäßigeren Ausgestaltung eine elektromotorische Antriebs- oder Traktionsmaschine, sowie eine damit versorgungstechnisch gekoppelte Fahrzeugoder Traktionsbatterie zur alternativen Energieversorgung auf, beispielsweise falls eine Oberleitung nicht zur Verfügung steht. Der Antriebsstrang ist an das Bordnetz des Kraftfahrzeugs gekoppelt. Zweckmäßigerweise ist die Fahrzeugbatterie mittels der Oberleitung aufladbar, sofern eine Kontaktierung vorliegt. Das Kraftfahrzeug weist dann unabhängig vom Wandlerbetrieb und vom Bypassbetrieb den Oberleitungsbetrieb und einen Batteriebetrieb auf. Im Oberleitungsbetrieb ist das Kraftfahrzeug mit der Oberleitung verbunden. Im Batteriebetrieb ist das Kraftfahrzeug dagegen von der Oberleitung getrennt, und die Antriebsmaschine wird mittels der Fahrzeugbatterie versorgt. Im Oberleitungsbetrieb wird mittels des Controllers zwischen Wandlerbetrieb und Bypassbetrieb unterschieden. Für den Batteriebetrieb sind der Wandlerbetrieb und der Bypassbetrieb dagegen zunächst nicht relevant.

Im Antriebsstrang ist zweckmäßigerweise ein Netz- oder Batterieschalter angeordnet, welcher im Bypassbetrieb das Bordnetz in zwei Teilnetze unterteilt, nämlich derart, dass der Gleichspannungswandler und die Fahrzeugbatterie mit einem ersten der Teilnetze verbunden ist und die Antriebsmaschine mit einem anderen, zweiten der Teilnetze. Dadurch ist eine Trennung der Antriebsmaschine von dem Gleichspannungswandler realisiert. Im Wandlerbetrieb ist der Batterieschalter dagegen geschlossen. Analog ist zweckmäßigerweise entlang der Bypassleitung ein Bypassschalter angeordnet, welcher im Wandlerbetrieb die Bypassleitung öffnet, und dadurch von der Antriebsmaschine trennt. Im Bypassbetrieb ist der Bypassschalter dagegen geschlossen. Der Bypassschalter und der Batterieschalter werden allgemein jeweils auch als Schalter bezeichnet. Insbesondere ist immer wenigstens einer der Schalter geöffnet, dies bedeutet, dass bei einem Umschalten vom Wandlerbetrieb in den Bypassbetrieb insbesondere erst der Batterieschalter geöffnet und dann danach der Bypassschalter geschlossen wird. Entsprechend wird umgekehrt beim Umschalten vom Bypassbetrieb in den Wandlerbetrieb zunächst erst der Bypassschalter geöffnet und danach der Netzschalter geschlossen. Ein jeweiliger Schalter ist vorzugsweise als galvanisch trennender Schalter ausgebildet. Die Schalter sind hierbei signaltechnisch an den Controller gekoppelt, und mittels diesem steuerbar oder betätigbar.

Die im Hinblick auf das vorstehend beschriebene Verfahren und/oder das vorstehend beschriebene Kraftfahrzeug angeführten Vorteile und Ausgestaltungen sind sinngemäß auch auf die nachfolgend beschriebene Software auf einem Datenträger übertragbar und umgekehrt.

Ein zusätzlicher oder weiterer Aspekt der Erfindung sieht eine Software auf einem Medium oder Datenträger zur Durchführung oder Ausführung des vorstehend beschriebenen Verfahrens vor. Dies bedeutet, dass die Software auf einem Datenträger hinterlegt ist, und zur Ausführung des vorstehend beschriebenen Verfahrens vorgesehen, sowie dafür geeignet und ausgestaltet ist. Dadurch ist eine besonders geeignete Software für den Betrieb eines elektrisch angetrieben oder antreibbaren Kraftfahrzeugs realisiert, mit welcher die Funktionalität zur Durchführung des erfindungsgemäßen Verfahrens programmtechnisch implementiert wird. Die Software ist somit insbesondere eine Betriebssoftware (Firmware), wobei der Datenträger beispielsweise ein Datenspeicher des Controllers ist.

Nachfolgend sind Ausführungsbeispiele der Erfindung anhand einer Zeichnung näher erläutert. Darin zeigen in schematischen und vereinfachten Darstellungen:

Fig. 1    ein Kraftfahrzeug mit einem Stromabnehmer,
Fig. 2    ein Schaltbild des Kraftfahrzeugs,
Fig. 3    eine Zustandsübergangsdiagramm des Kraftfahrzeugbetriebs,
Fig. 4    ein Diagramm eines generatorischen Betriebs bei einem Umschalten von einem Wandlerbetrieb auf einen Bypassbetrieb,
Fig. 5    ein Diagramm eines motorischen Betriebs bei einem Umschalten von dem Wandlerbetrieb auf den Bypassbetrieb ,
Fig. 6    ein Diagramm eines generatorischen Betriebs bei einem Umschalten von dem Bypassbetrieb auf den Wandlerbetrieb,
Fig. 7    ein Diagramm eines motorischen Betriebs bei einem Umschalten von dem Bypassbetrieb auf den Wandlerbetrieb,
Fig. 8    ein Flussdiagramm zur Bestimmung eines Rekuperationspotentials, und
Fig. 9    ein erweitertes Flussdiagramm zur Bestimmung des Rekuperationspotentials.

Einander entsprechende Teile und Größen sind in allen Figuren stets mit den gleichen Bezugszeichen versehen.

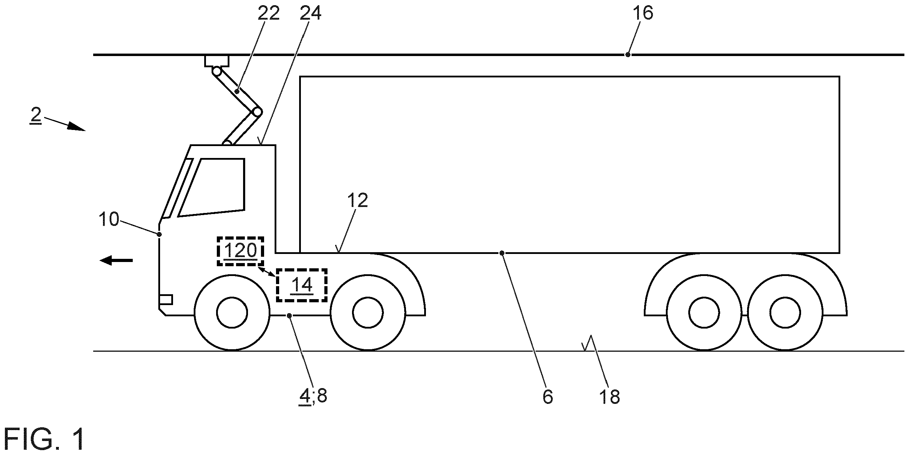

In der Fig. 1 ist in schematischer und vereinfachter Darstellung ein Lastkraftwagen (LKW) als elektrisch angetriebenes oder antreibbares Kraftfahrzeug 2 gezeigt. Das Kraftfahrzeug 2 ist hierbei insbesondere als ein Sattelkraftfahrzeug mit einem Gespann aus einem Zugfahrzeug 4 und einem Anhänger 6 ausgeführt. In einer nicht gezeigten Variante ist das Kraftfahrzeug 2 ein Oberleitungsbus.

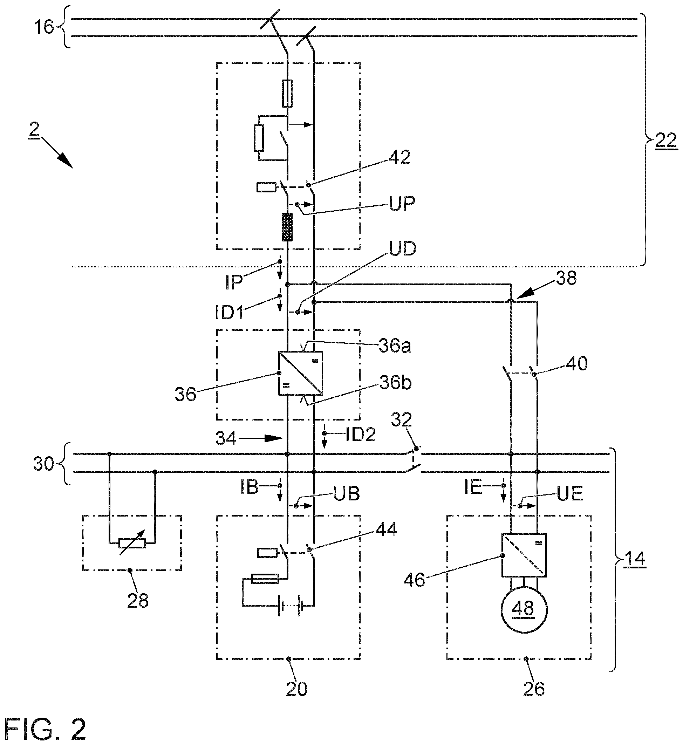

Das Zugfahrzeug 4 weist einen Fahrzeugrahmen 8 mit einer Fahrzeugkabine 10 sowie einen Fahrzeugaufbau 12 zur Aufnahme und Tragen des zu transportierenden Anhängers 6 auf. Im Fahrzeugrahmen 8 ist ein in Fig. 2 näher dargestellter Antriebsstrang 14 zum Antrieb des Kraftfahrzeugs 2 beziehungsweise Zugfahrzeugs 4 angeordnet. Der Antriebsstrang 14 ist hierbei insbesondere als ein rein elektrischer oder hybrid-elektrischer Antriebsstrang ausgeführt.

In der Fig. 1 ist weiterhin eine Oberleitung 16 als Stromversorgung gezeigt. Mittels der Oberleitung 16 ist eine darunter angeordnete Fahrbahn 18 elektrifiziert. Die Fahrbahn 18 ist beispielsweise eine rechte Fahrspur einer mehrspurigen Autobahn. Die Oberleitung 16 ist hierbei zum Beispiel mittels Masten, Auslegern, Hängern oder dergleichen etwa mittig oberhalb der Fahrbahn 18 verlaufend angeordnet. Die Oberleitung 16 ist vom Kraftfahrzeug 2 getrennt und ortsfest entlang der Fahrbahn 18 installiert. Die Oberleitung 16 ist zudem geerdet.

In Fig. 1 ist das Kraftfahrzeug 2 in einem Fahrbetrieb gezeigt, bei welchem das Kraftfahrzeug 2 mittels des Antriebsstrangs 14 entlang der Fahrbahn 18 sowie entlang der Oberleitung 16 fortbewegt wird.

Das Kraftfahrzeug 2 ist zur Energieübertragung mit der beispielsweise zweipoligen Oberleitung 16 mittels eines elektrischen Kontakts koppelbar. Hierbei wird elektrische Energie in das Kraftfahrzeug 2 beziehungsweise in eine fahrzeuginternen Fahrzeugbatterie oder Traktionsbatterie 20 (Fig. 2) eingespeist oder auch Bremsenergie (Rekuperationsenergie) des Kraftfahrzeugs 2 in die Oberleitung 16 rückgespeist.

Zur Energieübertragung weist das Ladefahrzeug 2 einen Stromabnehmer 22 auf, welcher an einem Fahrzeugdach 24 der Fahrzeugkabine 10 angeordnet ist. Der Stromabnehmer 22 weist beispielsweise eine bewegbare Scheren- oder Pantographenmechanik auf.

In Fig. 2 ist eine Verschaltung des Kraftfahrzeugs 2 und dessen Anbindung an die zweipolige Oberleitung 16 als ein Schaltbild dargestellt. Die gezeigte Ausführungsform stellt eine von mehreren geeigneten Ausführungsformen dar. Der hier gezeigte Antriebsstrang 14 des Kraftfahrzeugs 2 weist die Fahrzeugbatterie 20 und eine elektromotorische Antriebs- oder Traktionsmaschine 26 sowie einen beispielhaft gezeigten Hochvoltverbraucher 28 auf. Der Antriebsstrang 14 ist an ein lediglich ausschnittsweise dargestelltes Bordnetz 30 angeschlossen. Die Fahrzeugbatterie 20 ist insbesondere ein sekundäres Batteriesystem, welches mittels eines Ladeprozesses beispielsweise über die Oberleitung 16 aufladbar ist.

Im gezeigten Bordnetz 30 ist ein Netz- oder Batterieschalter 32 angeordnet, welcher zwischen der Fahrzeugbatterie 20 und der Antriebsmaschine 26 angeordnet ist. Zwischen dem Stromabnehmer 22 und dem Antriebsstrang 14 ist eine Normal- oder Wandlerleitung 34 angeordnet, welche im Bereich der Fahrzeugbatterie 20 an den Antriebsstrang 14 beziehungsweise an das Bordnetz 30 geführt ist. Entlang der Wandlerleitung 34 ist ein Gleichspannungswandler 36 verschaltet. Der Gleichspannungswandler 36 ist vorzugsweise als ein isolierender oder isolierter Gleichspannungswandler 36 ausgeführt. Der Gleichspannungswandler 36 weist hierbei eine erste, dem Stromabnehmer 22 zugewandte, Anschlussseite 36a, welche nachfolgend auch als Eingangsseite bezeichnet wird, und eine zweite, dem Antriebsstrang 14 beziehungsweise dem Bordnetz 30 zugewandte, Anschlussseite 36b, nachfolgend auch als Ausgangsseite bezeichnet, auf.

Zwischen dem Gleichspannungswandler 36 und dem Stromabnehmer 22 ist eine Bypassleitung 38 an die Wandlerleitung 34 angeschlossen. Die Bypassleitung 38 ist hierbei elektrisch parallel zu dem Gleichspannungswandler 36, und ist im Bereich der Antriebsmaschine 26 an den Antriebsstrang 14 beziehungsweise an das Bordnetz 30 geführt. In der Bypassleitung 38 ist ein Bypassschalter 40 verschaltet.

Der Stromabnehmer 22 weist ein Stromabnehmerschütz 42 auf, mittels welchem die Wandlerleitung 34 von der Oberleitung 16 trennbar ist. Die nicht näher bezeichneten Batteriemodule der Fahrzeugbatterie 20 sind hierbei mittels eines Batterieschützes 44 an das Bordnetz 30 angeschlossen.

Die Antriebsmaschine 26 weist einen Wechselrichter oder Inverter 46 zur Wandlung einer Bordnetz-Gleichspannung oder Eingangsspannung UE in eine mehrphasige, insbesondere dreiphasige, Motorspannung zum Betrieb eines Elektromotors 48 auf. Der Elektromotor 48 ist nachfolgend auch als Elektromaschine oder E-Maschine bezeichnet.

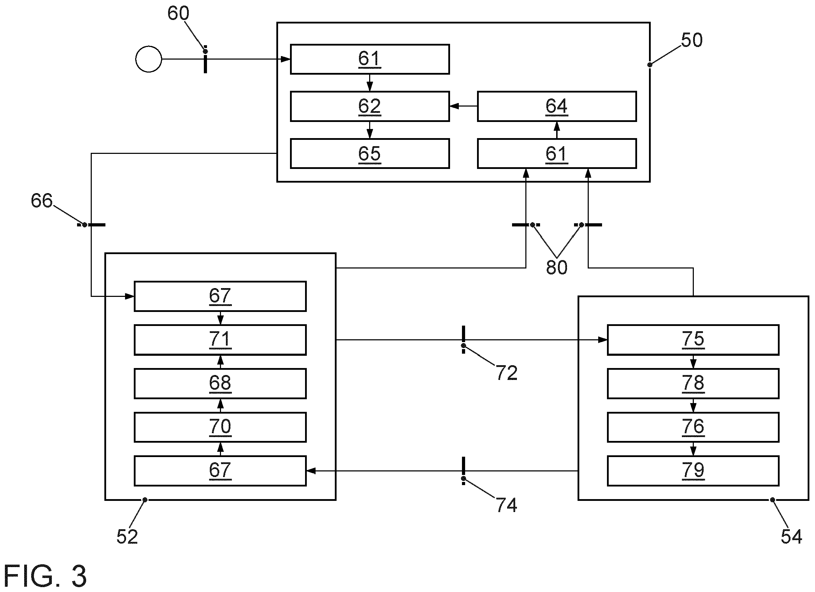

Nachfolgend sind drei Betriebsarten oder Betriebszustände 50, 52, 54 zum Betrieb des Kraftfahrzeugs 2 anhand der Figuren 3 bis 7 näher erläutert.

Die Fig. 3 zeigt ein Zustandsübergangsdiagramm oder einen Betriebsartenkoordinator einer Zustandsmaschine oder eines endlichen Automaten als Modell des Betriebs des Kraftfahrzeugs 2.

Die Betriebsart 50 ist nachfolgend auch als Batteriebetrieb oder Batteriemodus (engl.: Batteriemode) bezeichnet. Bei dem Batteriebetrieb 50 wird das Kraftfahrzeug 2 von der Oberleitung 16 getrennt, und die Antriebsmaschine 26 wird mittels der Fahrzeugbatterie 20 versorgt. Der Batteriebetrieb 50 ist hierbei für jede Fahrzeuggeschwindigkeit vVeh möglich. Mit anderen Worten ist es möglich, den Batteriebetrieb 50 für alle Fahrzeuggeschwindigkeiten vVeh, also im kompletten oder gesamten Geschwindigkeitsbereich zwischen Stillstand und einer Maximalgeschwindigkeit, zu aktivieren.

Für den Batteriebetrieb 50 wird das Batterieschütz 44 geschlossen, also elektrisch leitend geschaltet, und das Stromabnehmerschütz 42 geöffnet, also elektrisch nicht leitend geschaltet.

Des Weiteren wird der Batterieschalter 32 geschlossen und der Bypassschalter 40 geöffnet. Somit sind sowohl die Wandlerleitung 34 als auch die Bypassleitung 38 geöffnet. Dadurch ist der Strompfad zwischen dem Antriebsstrang 14 und der Oberleitung 16 getrennt, wodurch ein Stromabnehmer- oder Pantographenstrom IP auf null, also 0 A (Ampere), absinkt.

Der elektrische Strom des Kraftfahrzeugs 2 setzt sich hierbei aus einem Eingangsstrom IE der Antriebsmaschine 26 und eines Batteriestroms IB der Fahrzeugbatterie 20 zusammen, welche in diesem Falle betragsmäßig gleich, jedoch gegengerichtet sind. Im Falle eines motorischen Betriebs der Antriebsmaschine 26 wird der Batteriestrom IB als Eingangsstrom IE eingespeist, wobei im Falle eines generatorischen Betriebs der Eingangsstrom IE als Batteriestrom IB in die Fahrzeugbatterie 20 rückgespeist wird. Der Gleichspannungswandler 26 befindet sich hierbei in einem passiven Betrieb, so dass ein Wandlerstrom ID1 auf der Eingangsseite 36a und ein Wandlerstrom ID2 auf der Ausgangsseite 36b gleich null sind.

Der Batteriebetrieb 50 ist anhand der nachfolgenden Übergangstabelle zusammengefasst:

| Schaltelement/Baugruppe | Batteriebetrieb 50 |
|---|---|
| Batterieschütz 44 | geschlossen |
| Stromabnehmerschütz 42 | offen |
| Fahrzeuggeschwindigkeit vVeh | gesamt |
| Batterieschalter 32 | geschlossen |
| Bypassschalter 40 | offen |
| Strombilanz Stromabnehmer 22 | IP = 0 |
| Strombilanz Kraftfahrzeug 2 | 0=IB+IE |
| Antriebsmaschine 26 | motorisch/generatorisch |
| Stromabnehmerstrom IP | IP = 0 |
| Gleichspannungswandler 36 | passiv |
| Wandlerstrom | ID1 = ID2 = 0 |

Die Betriebsarten 52 und 54 gehören zu einem nicht näher bezeichneten Oberleitungsbetrieb, in welchem das Kraftfahrzeug 2 über den Stromabnehmer 22 mit der Oberleitung 16 verbunden ist. Im Oberleitungsbetrieb wird hierbei zwischen einem Wandlerbetrieb 52 und einem Bypassbetrieb 54 unterschieden. Der Wandlerbetrieb 52 und der Bypassbetrieb 54 schließen sich gegenseitig aus. Sowohl im Wandlerbetrieb 52 als auch im Bypassbetrieb 54 ist der Antriebsstrang 14 über die Oberleitung 16 mit Energie versorgt oder versorgbar.

Der Wandlerbetrieb 52 ist nachfolgend auch als Niedrigleistungsbetrieb oder als Niedrigleistungsmodus (engl. : Low Power Mode, LPM) bezeichnet. Im Wandlerbetrieb 52 ist der Stromabnehmer 22 über den Gleichspannungswandler 36 mit dem Antriebsstrang 14 elektrisch verbunden. Insgesamt ergibt sich demnach ein Strompfad von der Oberleitung 16 über den Stromabnehmer 22 und den Gleichspannungswandler 36 in den Antriebsstrang 14. Ähnlich zum Batteriebetrieb 50 ist der Wandlerbetrieb 52 für alle Fahrzeuggeschwindigkeiten vVeh, also im gesamten Geschwindigkeitsbereich, aktivierbar.

Für den Wandlerbetrieb 52 wird das Batterieschütz 44 und das Stromabnehmerschütz 42 geschlossen. Weiterhin wird der Batterieschalter 32 geschlossen und der Bypassschalter 40 geöffnet. Dadurch ist die Wandlerleitung 34 geschlossen und die Bypassleitung 38 geöffnet, so dass zwischen der Oberleitung 16 und dem Antriebsstrang 14 ein über den Gleichspannungswandler 36 geführter Strompfad gebildet ist. Der Stromabnehmerstrom IP ist somit gleich dem Wandlerstrom ID1.

Die Strombilanz des Kraftfahrzeugs 2 setzt sich hierbei aus dem Eingangsstrom IE der Antriebsmaschine 26 und dem Batteriestroms IB der Fahrzeugbatterie 20 sowie aus dem Wandlerstrom ID2 zusammen, insbesondere ist der Wandlerstrom ID2 die Summe aus dem Eingangsstrom IE und dem Batteriestrom IB. Der Gleichspannungswandler 36 ist während des Wandlerbetriebs 52 aktiv. Der Gleichspannungswandler 36 weist einen Wirkungsgrad $\eta$ auf, welcher beispielsweise unterschiedlich ist, wenn der Wandlerstrom von der Eingangsseite 36a zur Ausgangsseite 36b fließt, nachfolgend als Wirkungsgrad $\eta12$ bezeichnet, oder wenn der Wandlerstrom von der Ausgangsseite 36b zur Eingangsseite 36a fließt, nachfolgend als Wirkungsgrad $\eta21$ bezeichnet. Der eingangsseitige Wandlerstrom ID1 ergibt sich hierbei aus dem jeweiligen Wirkungsgrad $\eta$, dem Wandlerstrom ID2 und dem Verhältnis einer Batteriespannung UB der Fahrzeugbatterie 20 und einer Wandlerspannung UD des Gleichspannungswandlers 36 beziehungsweise der Wandlerleitung 34.

Der Wandlerbetrieb 52 ist im Wesentlichen in drei verschiedene (Unter-)Varianten 52a, 52b und 52c unterteilt.

Der Wandlerbetrieb 52a bezeichnet hierbei einen Wandlerbetrieb 52, bei welchem die Antriebsmaschine 26 motorisch arbeitet. In diesem Falle ist der Stromabnehmerstrom IP oder der Wandlerstrom ID1 positiv, also größer null, da Energie von der Oberleitung 16 in die Antriebsmaschine 26 eingespeist wird. Bei den Wandlerbetrieben 52b und 52c handelt es sich jeweils um einen Wandlerbetrieb 52, bei welchem die Antriebsmaschine 26 generatorisch arbeitet. In dem Wandlerbetrieb 52b wird die Fahrzeugbatterie 20 mit der rekuperierten Energie aufgeladen. Bei dem Wandlerbetrieb 52c wird die rekuperierte Energie der generatorisch arbeitenden Antriebsmaschine 26 in die Oberleitung 16 rückgespeist.

Der Wandlerbetrieb 52 ist anhand der nachfolgenden Übergangstabelle zusammengefasst:

| Schaltelement/Baugruppe | Wandlerbetrieb 52 | | |
|---|---|---|---|
| | 52a | 52b | 52c |
| Batterieschütz 44 | geschlossen | | |
| Stromabnehmerschütz 42 | geschlossen | | |
| Fahrzeuggeschwindigkeit vVeh | gesamt | | |
| Batterieschalter 32 | geschlossen | | |
| Bypassschalter 40 | offen | | |
| Strombilanz Stromabnehmer 22 | IP = ID1 | | |
| Strombilanz Kraftfahrzeug 2 | ID2 = IB + IE | | |
| Antriebsmaschine 26 | motorisch | generatorisch - Ladung Fahrzeugbatterie 2 | generatorisch - Rückspeisung Oberleitung 16 |
| Stromabnehmerstrom IP | IP > 0 | IP >= 0 | IP < 0 |
| Gleichspannungswandler 36 | $\eta = \eta 12$ | | $\eta = \eta 21$ |
| Wandlerstrom | ID1 = (1/$\eta$12)*ID2*UB/UD | | ID1 = $\eta$21*ID2*UB/UD |

Der Bypassbetrieb 54 ist nachfolgend auch als Hochleistungsbetrieb oder als Hochleistungsmodus (engl.: High Power Mode, HPM) bezeichnet. Im Bypassbetrieb 54 ist der Antriebsstrang 14 und die Oberleitung 16 zur Umgehung des Gleichspannungswandlers 36 über die Bypassleitung 38 elektrisch miteinander verbunden. Insgesamt ergibt sich demnach ein Strompfad von der Oberleitung 16 über den Stromabnehmer 22 und die Bypassleitung 38 in den Antriebsstrang 14. Im Gegensatz zum Batteriebetrieb 50 und dem Wandlerbetrieb 52 ist der Bypassbetrieb 54 lediglich für hohe Fahrzeuggeschwindigkeiten vVeh, also für Fahrzeuggeschwindigkeiten größer als ein Geschwindigkeitsschwellwert vThreshold, aktivierbar. Unter einer hohen Fahrzeuggeschwindigkeit vVeh wird somit insbesondere eine Geschwindigkeit im zwischen dem Geschwindigkeitsschwellwert vThreshold und der Maximalgeschwindigkeit des Kraftfahrzeugs 2 verstanden.

Für den Bypassbetrieb 54 wird das Batterieschütz 44 und das Stromabnehmerschütz 42 geschlossen. Weiterhin wird der Batterieschalter 32 geöffnet und der Bypassschalter 40 geschlossen. Durch den geöffneten Batterieschalter 32 wird das Bordnetz 30 zwischen der Fahrzeugbatterie 20 und der Antriebsmaschine 26 unterbrochen, so dass lediglich die hierzu parallele Verbindung über die Wandlerleitung 34 und die Bypassleitung 36 besteht. Der Stromabnehmerstrom IP setzt sich somit aus dem Wandlerstrom ID1 und den über die Bypassleitung 36 geführten Eingangsstrom IE zusammen.

Während des Bypassbetriebs 54 wird elektrische Energie über die Bypassleitung 38 geführt. Ähnlich zum Wandlerbetrieb 52 ist der Bypassbetrieb 54 hierbei in drei verschiedene (Unter-Varianten 54a, 54b und 54c unterteilbar. Der Bypassbetrieb 54a bezeichnet hierbei einen Bypassbetrieb 54, bei welchem die Antriebsmaschine 26 motorisch arbeitet. In diesem Falle wird elektrische Energie aus der Oberleitung 16 über die Bypassleitung 38 direkt in die Antriebsmaschine 26 eingespeist. Bei den Bypassbetrieben 54b und 54c handelt es sich jeweils um einen Bypassbetrieb 54, bei welchem die Antriebsmaschine 26 generatorisch arbeitet. In dem Bypassbetrieb 54b wird die Fahrzeugbatterie 20 mit der rekuperierten Energie aufgeladen. Hierbei wird die von der Antriebsmaschine 26 erzeugte Rekuperationsenergie über die Bypassleitung 38 und den Gleichspannungswandler 36 in die Fahrzeugbatterie 20 eingespeist. Bei einer im Wesentlichen vollständig geladenen Fahrzeugbatterie 20 wird die Rekuperationsenergie im Bypassbetrieb 54c über die Bypassleitung 38 in die Oberleitung 16 rückgespeist.

Der Bypassbetrieb 54 ist anhand der nachfolgenden Übergangstabelle zusammengefasst:

| Schaltelement/Baugruppe | Bypassbetrieb 54 | | |
|---|---|---|---|
| | 54a | 54b | 54c |
| Batterieschütz 44 | geschlossen | | |
| Stromabnehmerschütz 42 | geschlossen | | |
| Fahrzeuggeschwindigkeit vVeh | hoch | | |
| Batterieschalter 32 | offen | | |
| Bypassschalter 40 | geschlossen | | |
| Strombilanz Stromabnehmer 22 | IP = ID1 + IE | | |
| Strombilanz Kraftfahrzeug 2 | ID2 = IB | | |
| Antriebsmaschine 26 | motorisch | generatorisch - Ladung Fahrzeugbatterie 2 | generatorisch - Rückspeisung Oberleitung 16 |
| Stromabnehmerstrom IP | IP > 0 | IP >= 0 | IP < 0 |
| Gleichspannungswandler 36 | $\eta = \eta 12$ | | |
| Wandlerstrom | ID1 = (1/$\eta$ 12)*ID2*UB/UD | | |

Die Übergänge zwischen den Wandlerbetrieben 52a, 52b und 52c sowie die Übergänge zwischen den Bypassbetrieben 54a, 54b und 54c sind hierbei vorzugsweise kontinuierlich oder diskret, und werden anhand der jeweiligen elektrischen Ströme eingestellt und/oder geregelt.

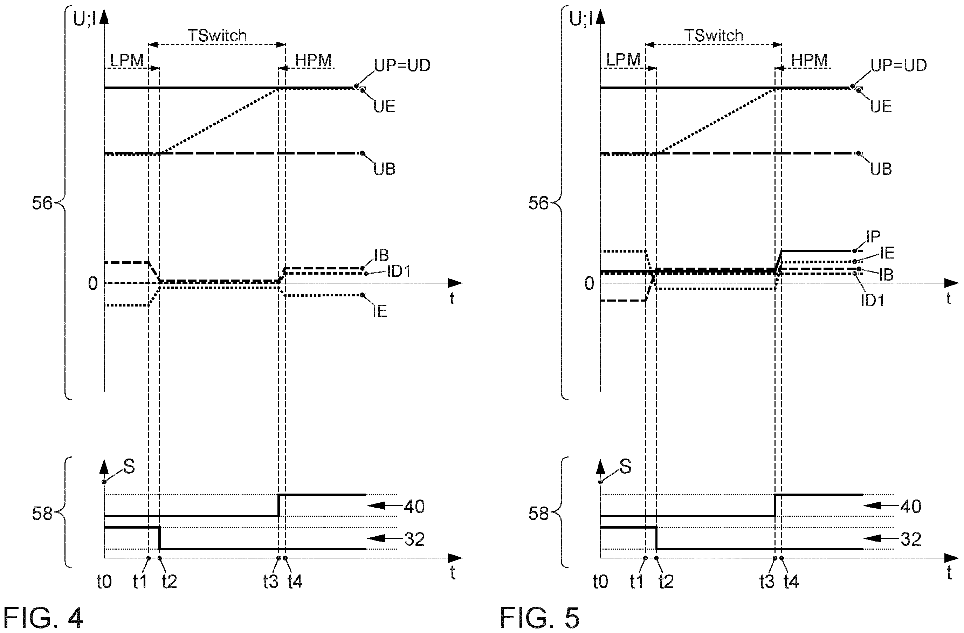

Die Figuren 4 bis 7 zeigen jeweils ein schematisches Diagramm für ein Umschalten zwischen dem Wandlerbetrieb 52 und dem Bypassbetrieb 54. Die Diagramme weisen jeweils zwei horizontale übereinander angeordnete Abschnitte 56, 58 auf. In den Abschnitten ist jeweils ein (Teil-)Diagramm gezeigt, in welchem horizontal, das bedeutet entlang der Abszissenachse (X-Achse), eine Zeit t aufgetragen ist. Der Beginn beziehungsweise das Ende des jeweiligen Wandlerbetriebs 52 beziehungsweise Bypassbetriebs 54 sind in den Diagrammen hierbei jeweils mit vertikalen, strichlinierten Linien gezeigt, wobei der Wandlerbetrieb 52 jeweils als LPM und der Bypassbetrieb 54 als HPM gekennzeichnet ist. Zum besseren Vergleich der Figuren 4 bis 7 sind in allen Figuren fünf Zeitpunkte t0, t1, t2, t3 und t4 gezeigt.

Das im Abschnitt 56 gezeigte Diagramm ist ein Strom/Spannungs-Zeit-Diagramm, dies bedeutet, dass entlang der vertikalen Ordinatenachse (Y-Achse) ein Strom I beziehungsweise vertikal versetzt eine Spannung U in Einheiten von Ampere (A) beziehungsweise Volt (V) aufgetragen ist.

In dem Abschnitt 58 ist ein Schaltzustands-Zeit-Diagramm für die Schaltzustände S für die Schalter 40 und 32 gezeigt, wobei entlang der vertikalen Ordinatenachse (Y-Achse) der Verlauf der Schaltzustände gezeigt ist. Die Verläufe der Schaltzustände S sind hierbei zu besseren Sichtbarkeit gegeneinander vertikal versetzt gezeigt. Die Schaltzustände S der Schalter 32, 40 weisen hierbei etwa stufenartigen oder stufenförmige Verläufe auf, wobei ein vertikal nach oben verlaufender Stufenabsatz ein Schließen des jeweiligen Schalters 32, 40 darstellt, und entsprechend ein vertikal nach unten verlaufender Stufenabsatz ein Öffnen des jeweiligen Schalters 32, 40 repräsentiert.

Die Fig. 4 und die Fig. 5 zeigen jeweils ein Diagramm für einen Umschaltvorgang von dem Wandlerbetrieb 52 auf den Bypassbetrieb 54. In der Fig. 4 ist hierbei ein Umschaltvorgang für einen generatorischen Betrieb, von dem Wandlerbetrieb 52b auf den Bypassbetrieb 54b, und in der Fig. 5 ein entsprechender Umschaltvorgang für einen motorischen Betrieb, von dem Wandlerbetrieb 52a auf den Bypassbetrieb 54a, gezeigt. Bei dem Umschaltvorgang vom Wandlerbetrieb 52a, 52b auf den korrespondierenden Bypassbetrieb 54a, 54b wird zunächst der Batterieschalter 32 geöffnet und anschließend der Bypassschalter 40 geschlossen.

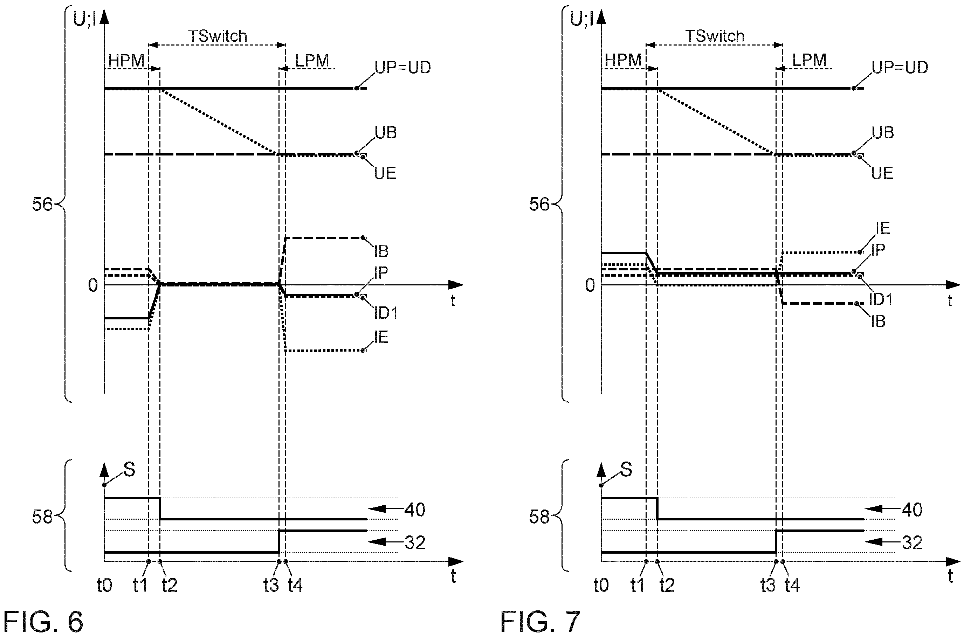

Die Fig. 6 und die Fig. 7 zeigen jeweils ein Diagramm für einen Umschaltvorgang von dem Bypassbetrieb 54 auf den Wandlerbetrieb 52. In der Fig. 6 ist hierbei ein Umschaltvorgang für einen generatorischen Betrieb, von dem Bypassbetrieb 54c auf den Wandlerbetrieb 52c, und in der Fig. 7 ein entsprechender Umschaltvorgang für einen motorischen Betrieb, von dem Bypassbetrieb 54a auf den Wandlerbetrieb 52a, gezeigt. Bei dem Umschaltvorgang vom Bypassbetrieb 54a, 54c auf den korrespondierenden Wandlerbetrieb 52a, 52c wird zunächst der Bypassschalter 40 geöffnet und anschließend der Batterieschalter 32 geschlossen.

Nachfolgend wird der Fahrbetrieb des Kraftfahrzeugs 2 anhand der Fig. 3 näher erläutert. Das Kraftfahrzeug 2 ist in diesem Ausführungsbeispiel insbesondere ein Hybridfahrzeug. Das Kraftfahrzeug 2 aktiviert im Falle einer Eingangsbedingung 60 für einen Hybrid- oder Elektrobetrieb beispielsweise den Batteriebetrieb 50.

Nachfolgend bezeichnet die Variable DesMode eine insbesondere geschwindigkeitsabhängige Soll-Betriebsart, wobei die Variable ActMode hierbei die aktuell eingestellte Ist-Betriebsart bezeichnet.

Beim Start des Batteriebetriebs 50 wird in einer Aktion 61 zunächst die Soll-Betriebsart auf den Batteriemodus 50 eingestellt. Anschließend werden - sofern notwendig - zwei Aktionen 62, 64 ausgeführt. In der Aktion 62 wird der Batterieschalter 32 geschlossen, und in der Aktion 64 der Bypassschalter 40 geöffnet. Abschließend wird in einer Aktion 65 die Ist-Betriebsart ActMode auf den Batteriemodus 52 eingestellt.

Bei dem Vorliegen einer Übergangsbedingung 66 wird von dem Batteriebetrieb 50 in den Wandlerbetrieb 52 gewechselt. Die Übergangsbedingung 66 ist hierbei, dass der Stromabnehmer 22 mit der Oberleitung 16 kontaktiert ist, und dass das Stromabnehmerschütz 42 geschlossen ist. Mit anderen Worten wird von dem Batteriebetrieb 50 auf den Oberleitungsbetrieb gewechselt, wenn der Stromabnehmer 22 mit der Oberleitung 16 kontaktiert wird.

Bei Aktivierung des Wandlerbetriebs 52 wird in einer Aktion 67 die Soll-Betriebsart DesMode auf den Wandlerbetrieb 52 (LPM) eingestellt. Des Weiteren werden - sofern notwendig - zwei Aktionen 68, 70 ausgeführt. In der Aktion 68 wird der Batterieschalter 32 geschlossen, und in der Aktion 70 wird der Bypassschalter 40 geöffnet. Anschließend wird in einer Aktion 71 die Ist-Betriebsart ActMode auf den Wandlerbetrieb 52 (LPM) eingestellt.

Das Umschalten von dem Wandlerbetrieb 52 auf den Bypassbetrieb 54 ist mittels einer Übergangsbedingung 72 charakterisiert. Das Umschalten von dem Bypassbetrieb 54 auf den Wandlerbetrieb 52 ist entsprechend mittels einer Übergangsbedingung 74 charakterisiert. Bei Aktivierung des Bypassbetriebs 54 wird zunächst in einer Aktion 75 die Soll-Betriebsart DesMode auf den Bypassbetrieb 54 (HPM) eingestellt. Anschließend werden - sofern notwendig - zwei Aktionen 76, 78 ausgeführt. In der Aktion 76 wird der Bypassschalter 40 geschlossen, und in der Aktion 78 wird der Batterieschalter 32 geöffnet. Anschließend wird in einer Aktion 79 die Ist-Betriebsart ActMode auf den Bypassbetrieb 54 (HPM) eingestellt.

Von dem Wandlerbetrieb 52 oder dem Bypassbetrieb 54 wird in den Batteriebetrieb 50 gewechselt, wenn eine Übergangsbedingung 80 erfüllt ist. Die Übergangsbedingung 80 ist hierbei, dass der Stromabnehmer 22 mit der Oberleitung 16 nicht kontaktiert ist, oder dass das Stromabnehmerschütz 42 geöffnet ist. Mit anderen Worten wird der Batteriebetrieb 50 aktiviert, wenn der Oberleitungsbetrieb beendet wird.

Gemäß dem erfindungsgemäßen Verfahren ist das Umschalten oder Wechseln zwischen dem Wandlerbetrieb 52 und dem Bypassbetrieb 54 abhängig von der Fahrzeuggeschwindigkeit vVeh und einem berechneten Rekuperationspotential. Dies bedeutet, dass das Umschalten unter zusätzlicher Berücksichtigung eines berechneten oder prognostizierten Rekuperationspotentials für die Betriebsarten 52, 54 erfolgt. Mit anderen Worten sind die Übergangsbedingungen 72 und 74 abhängig von der aktuellen Fahrzeuggeschwindigkeit vVeh und dem Rekuperationspotential.

Gemäß der Übergangsbedingung 72 wird von dem Wandlerbetrieb 52 auf den Bypassbetrieb 54 umgeschaltet, wenn die Fahrzeuggeschwindigkeit vVeh größer als ein erster Geschwindigkeitsschwellwert ist, und wenn das Rekuperationspotential für den Bypassbetrieb 54 energetisch günstiger als für den Wandlerbetrieb 52 ist. Entsprechend wird gemäß der Übergangsbedingung 74 von dem Bypassbetrieb 54 auf den Wandlerbetrieb 52 umgeschaltet, wenn die Fahrzeuggeschwindigkeit vVeh kleiner als ein zweiter Geschwindigkeitsschwellwert ist, oder wenn das Rekuperationspotential für den Wandlerbetrieb 52 energetisch günstiger als für den Bypassbetrieb 54 ist.

Der erste Geschwindigkeitsschwellwert und der zweite Geschwindigkeitsschwellwert entsprechen dem Geschwindigkeitsschwellwert vThreshold unter Berücksichtigung einer Geschwindigkeitshysterese vHyst. Das Rekuperationspotential wird im Zuge der Übergangsbedingungen 72, 74 insbesondere mittels einer Variable DesModeEff charakterisiert, welche angibt welcher (Soll)Betrieb oder welche Betriebsart das höchste Rekuperationspotential aufweist.

In einem Pseudocode ist die Übergangsbedingung 72 beispielsweise verkürzt als "(vVeh > vThreshold + 0,5*vHyst) && (DesModeEff == HPM)" ausgedrückt. Entsprechend ist die Übergangsbedingung 74 in dem Pseudocode als "(vVeh <= vThreshold - 0,5*vHyst) || (DesModeEff == LPM)" ausdrückbar.

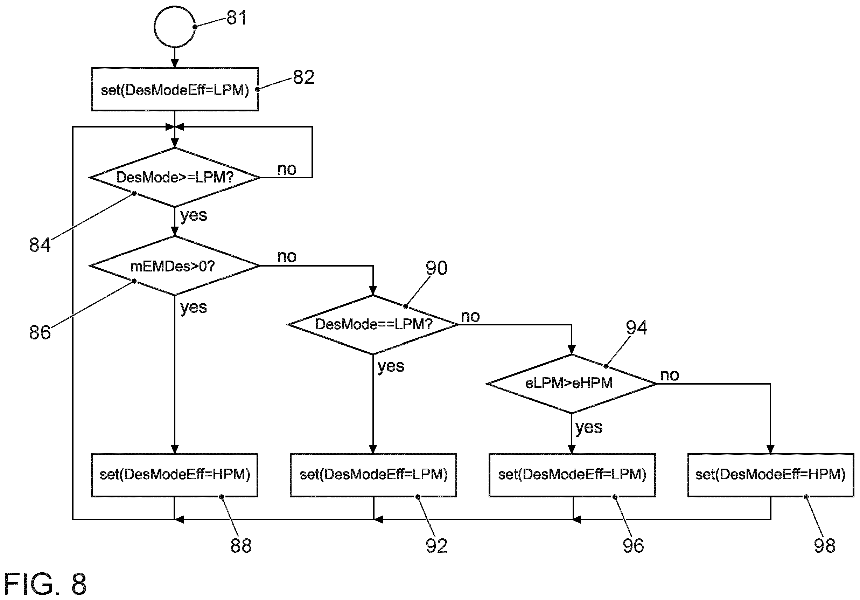

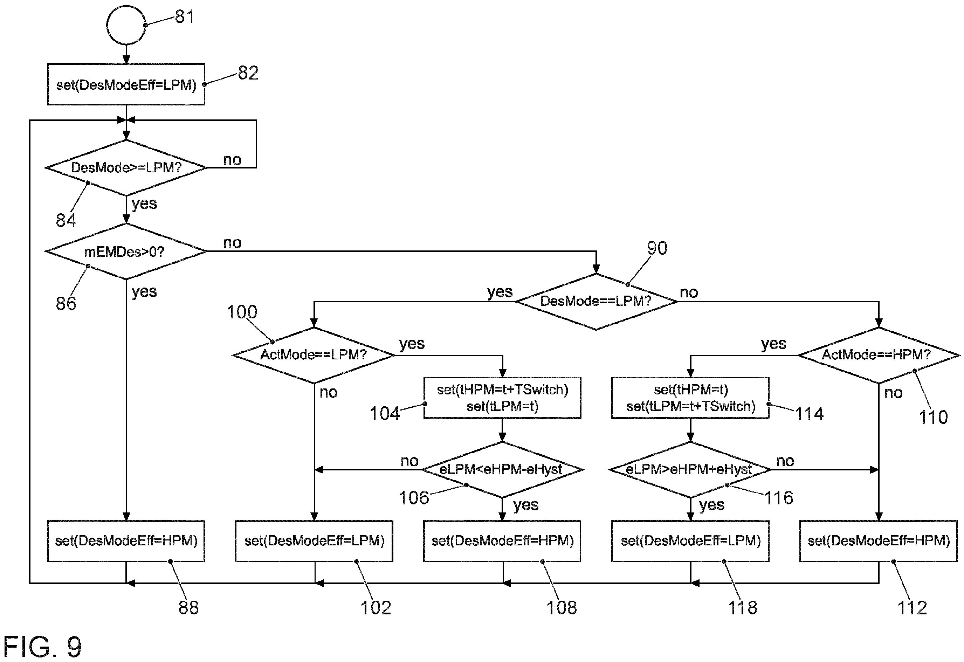

Nachfolgend ist die Bestimmung der Variable DesModeEff anhand der Fig. 8 und Fig. 9 näher erläutert. In den Darstellungen der Fig. 8 und der Fig. 9 wird davon ausgegangen, dass den Betriebsarten 50, 52 und 54 jeweils numerische Zahlenwerte zugeordnet sind. Beispielsweise ist dem Batteriebetrieb 50 der Zahlenwert "1" und dem Wandlerbetrieb 52 der Zahlenwert "2" sowie dem Bypassbetrieb der Zahlenwert "3" zugeordnet.

Erfindungsgemäß zeigt der Wert der Variablen DesModeEff an, welche der beiden Betriebsarten 52, 54 bezogen auf die Fahrsituation als energetisch am sinnvollsten erscheint und damit zusätzlich zur Fahrgeschwindigkeit die Betriebsarten (DesMode bzw. ActMode) kontrolliert. Mit anderen Worten charakterisiert die Variable DesModeEff das Rekuperationspotential.

Die Fig. 8 zeigt ein Flussdiagramm zur Bestimmung der Variable DesModeEff. Das Rekuperationspotential beziehungsweise die Variable DesModeEff wird hierbei anhand eines prognostizierten Soll-Drehmoments des Antriebsstrangs 14 berechnet. Hierzu wird nach einem Verfahrensstart 81 in einem Verfahrensschritt 82 zunächst die Variable DesModeEff auf den Wandlerbetrieb 52 (LPM) eingestellt. In einem darauffolgenden Verfahrensschritt 84 wird zunächst geprüft, ob die Soll-Betriebsart DesMode ungleich dem Batteriemodus 50 ist. Mit anderen Worten wird überprüft, ob eine Verbindung zur Oberleitung 16 besteht. Ausgedrückt in Pseudocode entspräche dies "DesMode != BatteryMode?" oder im Hinblick auf die zugeordneten Zahlenwerte der Betriebsarten "DesMode >= LPM?".

Nach dem Verfahrensschritt 84 wird in einem Verfahrensschritt 86 ein (Soll-)Drehmoment mEMDes des Elektromotors 48 bestimmt. Das Soll-Drehmoment mEMDes wird hierbei insbesondere anhand einer Fahrprofilvorausschau mittels Navigationsdaten und/oder Fahrzeugdaten und/oder Verkehrsdaten des Kraftfahrzeugs 2 prognostiziert. Anschließend wird geprüft ob das Soll-Drehmoment mEMDes einen positiven oder negativen Wert aufweist. , Ein positiver Wert (mEMDes > 0) impliziert hierbei einen motorischen Betrieb des Elektromotors 48, wobei negative Werte (mEMDes < 0) einen generatorischen Betrieb des Elektromotors 48 implizieren.

Für den Motorbetrieb wird angenommen, dass der Bypassbetrieb 54, also die direkte Entnahme der gesamten Motorleistung aus der Oberleitung 16, der energetisch günstigste Zustand ist. Bei einem positiven Vergleichsergebnis, also bei einem Soll-Drehmoment größer null, wird die Variable DesModeEff in einem Verfahrensschritt 88 auf den Bypassbetrieb 54 gesetzt.

Im Falle eines negativen Vergleichsergebnisses, also bei einem Soll-Drehmoment kleiner null, wird in einem Verfahrensschritt 90 geprüft, ob der Soll-Betrieb DesMode gleich dem Wandlerbetrieb 52 ist. Bei einem positiven Vergleichsergebnis des Verfahrensschritts 90 wird die Variable DesModeEff in einem Verfahrensschritt 92 auf den Wandlerbetrieb 52 gesetzt.

Bei einem negativen Vergleichsergebnis des Verfahrensschritts 90 wird in einem Verfahrensschritt 94 ein erster Energiewert eLPM für den Wandlerbetrieb 52 und ein zweiter Energiewert eHPM für den Bypassbetrieb 54 bestimmt. Die bestimmten Energiewerte eLPM, eHPM werden anschließend im Verfahrensschritt 94 miteinander verglichen. Dies bedeutet, dass für den Fall, dass der Bypassbetrieb 54 aktiv ist, wird das Rekuperationspotential (Vorhersage einer Energiemenge) in den beiden Betriebsarten 52, 54 verglichen, um den energetisch sinnvollsten Modus zu bestimmen. Die Prädiktion einer Energiemenge ist deshalb sinnvoll, da das Umschalten in den Wandlerbetrieb 52 eine gewisse Zeit erfordert, in der keine Leistung umgesetzt werden kann. Der Prädiktionshorizont (tP) ist der Umschaltzeit (TSwitch) anzupassen, wobei ein Horizont von 3 bis 5-facher Umschaltzeit bevorzugt wird. Ist der Energiewert eLPM größer, so wird in einem Verfahrensschritt 96 die Variable DesModeEff gleich dem Wandlerbetrieb 52 gesetzt. Sofern der Energiewert eHPM größer ist, wird in einem Verfahrensschritt 98 die Variable DesModeEff gleich dem Bypassbetrieb 54 gesetzt.

Nachfolgend werden einige Beispiele zur Berechnung der Energiewerte eLPM und eHPM angegeben. Die Berechnung der Energiewerte eLPM und eHPM entspricht der Vorhersage oder Prädiktion der rekuperierten Energien basierend auf einem festen Vorhersagehorizont mit zwei Proben. Die Beispiele stellen bevorzugte Ausführungsformen dar, daneben existieren aber noch weitere geeignete Ausführungsformen, welche hier nicht explizit wiedergegeben sind.

Die Energiemenge eHPM, welche im Bypassbetrieb 54 bleibt, entspricht dem Durchschnitt der aktuell gemessenen (t) und vorhergesagten (tP = t + TPred) Batterieladeleistung und der regenerativen Stromabnehmerleistung, multipliziert mit einer Zeitdauer TPred. Hierbei werden beispielhafte Gewichtsfaktoren a1, a2 von beispielsweise von a1 = 1, a2 = 0,5 angenommen.

Die Zeitdauer tP für die Vorhersage ist die Summe aus der aktuell gemessenen Zeit t und der Zeitdauer TPred

$$tP := t + TPred$$

Der Generatorstrom IE ergibt sich als Funktion f aus der Strecken- oder Fahrprofilvorausschau und einem Antriebsstrangmodell, mittels welchem das Drehmoment mEMDes und eine Drehzahl nEM des Elektromotors 48 bestimmt wird, sowie einem Generatorkennfeld, welches aus den Antriebsstranggrößen mEMDes und nEM bei einer gegebenen Generatorspannung UE, die gleich der Stromabnehmerspannung UP ist, und einer Generatorstrombegrenzung IEMin

$$IE(tP) = f(mEMDes(tP), nEM(tP), UE(tP) = UP(tP), IEMin(tP))$$

Nachfolgend sind die Zusätze "Min" oder "Max" als entsprechende Begrenzungen nach unten oder oben zu verstehen. Die Drehzahl nEM ist ein prädizierter Wert für die Drehzahl der Antriebsmaschine 26. Aus der Antriebsstrangvorausschau ergibt sich sowohl eine Fahrzeuggeschwindigkeit als auch ein Raddrehmoment. Beides führt mit der Fahrstufe auf eine Drehzahl nEM und ein Drehmoment mEMDes an der E-Maschine 48.

Der maximale Wandlerstrom ID1 ist hierbei

$$ID1(tP) = min(ID1Max(tP), -IE(tP))$$

Entsprechend ergibt sich der Wandlerstrom ID2 als

$$ID2(tP) = min(ID2Max(tP), ID1(tP) * \frac{UP(tP)}{UB(tP)} * \eta 12(tP))$$

wobei UP eine Stromabnehmerspannung ist.

Der Batterieladestrom oder Batteriestrom während des Bypassbetriebs IBHPM ergibt sich somit als

$$IBHPM(tP) = min(ID2(tP), IBChargeMax(tP))$$

wobei mit IBChargeMax ein maximaler Ladestrom bezeichnet ist.

Anschließend wird der Wert des Wandlerstroms ID1 anhand der Strombegrenzungen des Batteriestroms IB neu berechnet

$$ID1(tP) = IBHPM(tP) * \frac{UB(tP)}{UP(tP)} * \frac{1}{\eta 12(tP)}$$

Der rückgespeiste Stromabnehmerstrom während des Bypassbetriebs IPHPM ist somit

$$IPHPM(tP) = max(IE(tP) + ID1(tP), IPMin(tP))$$

Zur Begrenzung des Drehmoments mEMDes der Elektromaschine 48 in der Antriebsstrangvorausschau ergibt sich aus dem rückgespeisten Stromabnehmerstrom IPHPM und dem Wandlerstrom ID1 in Wert für den maximalen Generatorstrom IEDrainMax

$$IEDrainMax(tP) = IPHPM(tP) - ID1(tP)$$

Der Energiewert eHPM ist somit

$$eHPM = (a1 * IBHPM(t) * UB(t) - a2 * IPHPM(t) * UP(t) + a1 * IBHPM(tP) * UB(tP) - a2 \\ * IPHPM(tP) * UP(tP)) * 0{,}5 * TPred$$

Die Energiemenge eLPM beim Umschalten vom Bypassbetrieb 54 auf den Wandlerbetrieb 52 entspricht dem Mittelwert aus der Batterieladeleistung und der Stromabnehmer-Regenerativleistung nach dem Umschalten (tS = t + TSwitch) und bei der vorhergesagten Zeitdauer (tP = t + TPred), multipliziert mit einer Zeitdauer "TPred - TSwitch". Die Zeitdauer TSwitch ist die Zeitdauer nach einem Umschalten einer der Schalter 32, 40 (vgl. Fig. 4 bis Fig. 7).

Es ergibt sich somit zunächst eine doppelte Zeitvorhersage, wobei die Zeitvorhersage nach dem Umschalten mit der Zeitdauer TSwitch einen kürzeren Vorhersagehorizont als die Zeitdauer TPred aufweist:

$$tS := t + TSwitch$$

$$tP := t + TPred$$

Die Eingangs- oder Generatorströme ergeben sich somit als:

$$IE(tS) = f(mEMDes(tS), nEM(tS), UE(tS) = UB(tS), IEMin(tS))$$

$$IE(tP) = f(mEMDes(tP), nEM(tP), UE(tP) = UB(tP), IEMin(tP))$$

Der Batterieladestrom oder Batteriestrom während des Bypassbetriebs IBLPM ergibt sich somit als

$$IBLPM(tP) = min(-IE(tS)), IBChargeMax(tS))$$

$$IBLPM(tS) = min(-IE(tP), IBChargeMax(tP))$$

Der Wandlerstrom ID2 ist hierbei

$$ID2(tS) = max(IE(tS) + IBLPM(tS), ID2Min(tS), ID1Min(tS) * \frac{UP(tS)}{UB(tS)} * \frac{1}{\eta21(tS)}, IPMin(tS)$$
$$* \frac{UP(tS)}{UB(tS)} * \frac{1}{\eta21(tS)})$$

$$ID2(tP) = max(IE(tP) + IBLPM(tP), ID2Min(tP), ID1Min(tP) * \frac{UP(tP)}{UB(tP)} * \frac{1}{\eta21(tP)}, IPMin(tP)$$
$$* \frac{UP(tP)}{UB(tP)} * \frac{1}{\eta21(tP)})$$

Zur Begrenzung des Drehmoments mEMDes der Elektromaschine 48 in der Antriebsstrangvorausschau ergibt sich aufgrund der Strombegrenzungen für IB, ID und IP ein Maximalwert für den Generatorstrom IEDrainMax

$$IEDrainMax(tS) = ID2(tS) - IBLPM(tS)$$

$$IEDrainMax(tP) = ID2(tP) - IBLPM(tP)$$

Der rückgespeiste Stromabnehmerstrom ist somit

$$IP(tS) = ID2(tS) * \frac{UB(tS)}{UP(tS)} * \eta21(tS)$$

$$IP(tP) - ID2(tP) * \frac{UB(tP)}{UP(tP)} * \eta21(tP)$$

Der berechnete Energiewert eLPM ist somit

$$eLPM = (a1 * IBLPM(tS) * UB(tS) - a2 * IPLM(tS) * UP(tS) + a1 * IBLPM(tP) * UB(tP) - a2$$
$$* IPLPM(tP) * UP(tP)) * 0,5 * (TPred - TSwitch)$$

Zusammenfassend werden im Zuge der Prädiktion des Rekuperationspotentials eine aus der Fahrprofilvorausschau ermittelte generatorische Soll-Leistung (durch die Grenzen der Stromsenken begrenzt) und darauf basiert der DC-Strom der Antriebsmaschine 26 (generatorisch), der maximale Ladestrom IBHPM, IBLPM der Fahrzeugbatterie 20 sowie die Stromgrenzen ID1, ID2, IP des Gleichspannungswandlers 36 und der Oberleitung 16 berücksichtigt. Für den Wandlerbetrieb 52 wird dabei die Zeitspanne TPred-TSwitch genutzt, da hierfür eine Umschaltung erforderlich ist, während im Bypassbetrieb 54 der Prädiktionshorizont TPred relevant ist. Für beide Modi wird jeweils der (bewertete) Durchschnittswert aus der Summe der beiden Rückspeisesenken (Annahme eines linearen Verlaufs zwischen den Zeitpunkten) zu den jeweils betrachteten Zeitpunkten gebildet und mit der betrachteten Zeitspanne multipliziert. Die unterschiedliche Bewertung der Rückspeisesenken soll hierbei zeigen, dass ein direkt in die Fahrzeugbatterie 20 rückgespeister Strom wertvoller ist, als ein in die Oberleitung 16 rückgespeister Strom, welcher unter Umständen vom Versorger oder Netzbetreiber nicht zusätzlich vergütet wird. Hier sind allerdings je nach Abrechnungsmodell gewisse Freiheitsgrade denkbar.

Aus den bisherigen Ausführungen wird deutlich, dass auch andere Berechnungsformeln möglich und geeignet sind, um die dargelegten Funktionsprinzipien zu realisieren. Insbesondere sind auch Ausgestaltungen geeignet, bei welchen die Funktion zur Ermittlung der Energiewerte eLPM, eHPM durch eine oder mehrere Kennlinien oder Kennfelder abgebildet ist. Die Kennlinien oder Kennfelder werden beispielsweise in entsprechenden Versuchen oder Erprobungen ermittelt.

Zur Erhöhung der Genauigkeit bei der Berechnung der Rekuperationspotentiale für die Betriebsarten 52, 54 ist es in einer möglichen Ausführung denkbar, anstatt der Annahme einer linearen Verbindung zwischen den Betrachtungszeitpunkten t bzw. t+tSwitch und t+tPred einen nichtlinearen Verlauf anzunehmen. Hierbei ist es sinnvoll, mehrere Stützstellen für die Berechnung anzusetzen, und die Energiemengen eHPM, eLPM als Integrale der Leistungen zu den (Abtast-)Zeitpunkten zu begreifen. Damit wird die Betrachtung zweier Werte zu einer Funktion einer Zeitreihe, welche den Verlauf der Größen repräsentiert.

Die vorstehenden Gleichungen, repräsentierend die physikalischen Beziehungen, sind für die Zeitreihenbetrachtung identisch mit den auf Zeitpunkte bezogenen Betrachtungen, mit Ausnahme der Gleichungen für eHPM und eLPM. Die Energiemenge eHPM für den Fall, dass die Betriebsart Bypassbetrieb 54 bestehen bleibt, entspricht dem Integral von Stromabnehmer- und Batterie-Regenerativleistung im Intervall TPred zwischen aktuellem Abtastzeitpunkt t und Vorhersagezeitpunkt tP.

Der Energiewert eHPM ist hierbei

$$eHPM = \int_{t}^{tP} a1 * IBHPM(t) * UB(t) - a2 * IPHPM(t) * UP(t)\, dt$$

Die Energiemenge eLPM beim Umschalten vom Bypassbetrieb 54 auf den Wandlerbetrieb 52 entspricht dem zeitabhängigen Integral aus Batterieladeleistung und Stromabnehmer-Regenerativleistung nach dem Umschalten (t = t + TSwitch) und der vorhergesagten Zeitdauer (t = t + TPred)

$$eLPM = \int_{tS}^{tP} a1 * IBLPM(t) * UB(t) - a2 * IPLPM(t) * UP(t)\, dt$$

Vorstehend wurde davon ausgegangen, dass der Wandlerbetrieb 52 für den Generatorbetrieb die größte Effizienz besitzt, so dass ein Umschalten vom LPM in den HPM im Entscheidungsbaum der Fig. 8 für den Generatorbetrieb nicht vorgesehen ist. Jedoch ist es beispielsweise nach einer längeren Gefällefahrt im Wandlerbetrieb 52 möglich, dass die Fahrzeugbatterie 20 vollständig aufgeladen ist, wodurch der (generatorische) Bypassbetrieb 54c eine effizientere Betriebsart darstellt (Oberleitungs-Rückspeisung). In diesem Falle wäre eine Umschaltung in den Bypassbetrieb 54 sinnvoll.

Nachfolgend sind die Berechnungsalgorithmen für die Rekuperationspotentiale eLPM und eHPM angepasst, wobei in der Fig. 9 ein entsprechender Entscheidungsbaum dargestellt ist. Im Grundsatz wird jeweils der Startzeitpunkt für die Energiemengenberechnung in Abhängigkeit des jeweiligen Istzustands angepasst (entweder t=t oder t=t+TSwitch), wodurch ein Umschalten in die jeweils andere Betriebsart eine durch das Umschalten verlorene Energie berücksichtigt.

Die Energiemenge eHPM, die im Bypassbetrieb 54 bleibt, entspricht dem Durchschnitt der Batterieladeleistung und der regenerativen Stromabnehmerleistung zu einer Startzeit tHPM und der vorhergesagten Zeit tP, multipliziert mit einer Zeitdauer "tP-tHPM". Abhängig von der aktuellen Betriebsart (LPM oder HPM) wird die Startzeit tHPM auf t oder tS = t + TSwitch eingestellt.

Für die Zeitvorhersage gilt somit in einem Pseudocode

$$tP := t + TPred$$

$$if(ActMode == HPM\ \&\&\ DesMode == HPM)\, tHPM := t$$

$$if(ActMode == LPM \&\& DesMode == LPM)\,tHPM := t + TSwitch$$

Der Generatorstrom IE ist

$$IE(tHPM) = f(mEMDes(tHPM), nEM(tHPM), UE(tHPM) = UP(tHPM), IEMin(tHPM))$$

$$IE(tP) = f(mEMDes(tP), nEM(tP), UE(tP) = UP(tP), IEMin(tP))$$

Der maximale Wandlerstrom ID1 ist:

$$ID1(tHPM) = min(ID1Max(tHPM), -IE(tHPM))$$

$$ID1(tP) = min(ID1Max(tP), -IE(tP))$$

Der Wandlerstrom ID2 ergibt sich als:

$$ID2(tIIPM) - min(ID2Max(tIIPM), ID1(tIIPM) * \frac{UP(tHPM)}{UB(tHPM)} * \eta12(tIIPM))$$

$$ID2(tP) = min(ID2Max(tP), ID1(tP) * \frac{UP(tP)}{UB(tP)} * \eta12(tP))$$

Der Batterieladestrom IBHPM ist

$$IBHPM(tHPM) = min(ID2(tHPM), IBChargeMax(tHPM))$$

$$IBHPM(tP) = min(ID2(tP), IBChargeMax(tP))$$

Der Update-Wert des Wandlerstroms ID1 aufgrund der Strombegrenzungen IB, ID ist

$$ID1(tHPM) = IBHPM(tHPM) * \frac{UB(tHPM)}{UP(tHPM)} * \frac{1}{\eta12(tHPM)}$$

$$ID1(tP) = IBHPM(tP) * \frac{UB(tP)}{UP(tP)} * \frac{1}{\eta12(tP)}$$

Der rückgespeiste Stromabnehmerstrom während des Bypassbetriebs IPHPM ist hierbei

$$IPHPM(tHPM) = max(IE(tHPM) + ID1(tHPM), IPMin(tHPM))$$

$$IPHPM(tP) = max(IE(tP) + ID1(tP), IPMin(tP))$$

Zur Begrenzung des Drehmoments mEMDes der Elektromaschine 48 in der Antriebsstrangvorausschau ergibt sich aufgrund der Strombegrenzungen für IB, ID und IP ein Maximalwert für den Generatorstrom IEDrainMax

$$IEDrainMax(tHPM) = IPHPM(tHPM) - ID1(tHPM)$$

$$IEDrainMax(tP) = IPHPM(tP) - ID1(tP)$$

Der Energiewert eHPM ist somit

$$eHPM = (a1 * IBHPM(tHPM) * UB(tHPM) - a2 * IPHPM(tHPM) * UP(tHPM) + a1$$
$$* IBHPM(tP) * UB(tP) - a2 * IPHPM(tP) * UP(tP)) * 0,5 * (tP - tHPM)$$

Analog ergibt sich die Energiemenge eLPM beim Umschalten von HPM auf LPM aus dem Mittelwert der Batterieladeleistung und der Stromabnehmer-Regenerativleistung bei einer Startzeit tLPM und der vorhergesagter Zeit (tP = t + TPred), multipliziert mit einer Zeitdauer "tP-tLPM".

Abhängig von der aktuellen Betriebsart (LPM oder HPM) wird die Startzeit entweder auf tLPM = t oder tLPM = t+TSwitch eingestellt

$$tP := t + TPred$$

$$if(ActMode == LPM \&\& DesMode == LPM)\ tLPM := t$$

$$if(ActMode == HPM \&\& DesMode == HPM)\ tLPM := t + TSwitch$$

Die Generatorströme ergeben sich somit als:

$$IE(tLPM) = f(mEMDes(tLPM), nEM(tLPM), UE(tLPM) = UB(tLPM), IEMin(tLPM))$$

$$IE(tP) = f(mEMDes(tP), nEM(tP), UE(tP) = UB(tP), IEMin(tP))$$

Der Batterieladestrom oder Batteriestrom während des Bypassbetriebs IBLPM ist

$$IBLPM(tLPM) = min(-IE(tLPM)), IBChargeMax(tLPM))$$

$$IBLPM(tP) = min(-IE(tP), IBChargeMax(tP))$$

Der Wandlerstrom ID2 ist

$$ID2(tLPM) = max(IE(tLPM) + IBLPM(tLPM), ID2Min(tLPM), ID1Min(tLPM) * \frac{UP(tLPM)}{UB(tLPM)}$$
$$* \frac{1}{\eta 21(tLPM)}, IPMin(tLPM) * \frac{UP(tLPM)}{UB(tLPM)} * \frac{1}{\eta 21(tLPM)})$$

$$ID2(tP) = max(IE(tP) + IBLPM(tP), ID2Min(tP), ID1Min(tP) * \frac{UP(tP)}{UB(tP)} * \frac{1}{\eta 21(tP)}, IP$$
$$- Min(tP) * \frac{UP(tP)}{UB(tP)} * \frac{1}{\eta 21(tP)})$$

Zur Begrenzung des Drehmoments mEMDes der Elektromaschine 48 in der Antriebsstrangvorausschau ergibt sich aufgrund der Strombegrenzungen für IB, ID und IP ein Maximalwert für den Generatorstrom IEDrainMax

$$IEDrainMax(tLPM) = ID2(tLPM) - IBLPM(tLPM)$$

$$IEDrainMax(tP) = ID2(tP) - IBLPM(tP)$$

Der rückgespeiste Stromabnehmerstrom ist somit

$$IP(tLPM) = ID2(tLPM) * \frac{UB(tLPM)}{UP(tLPM)} * \eta21(tLPM)$$

$$IP(tP) = ID2(tP) * \frac{UB(tP)}{UP(tP)} * \eta21(tP)$$

Der berechnete Energiewert eLPM ist somit

$$eLPM = (a1 * IBLPM(tLPM) * UB(tLPM) - a2 * IPLPM(tLPM) * UP(tLPM) + a1 * IBLPM(tP)$$
$$* UB(tP) - a2 * IPLPM(tP) * UP(tP)) * 0{,}5 * (tP - tLPM)$$

Für die integrierten Energiewerte ergibt sich entsprechend

$$eHPM = \int_{tHPM}^{tP} a1 * IBHPM(t) * UB(t) - a2 * IPHPM(t) * UP(t)\, dt$$

$$eLPM = \int_{tLPM}^{tP} a1 * IBLPM(t) * UB(t) - a2 * IPLPM(t) * UP(t)\, dt$$

Für die Integralformen werden die Zeitgrenzen im Vergleich zu dem anhand der Fig. 8 erläuterten Beispiel entsprechend angepasst.

Die Fig. 9 zeigt ein Flussdiagramm zur Bestimmung der Variable DesModeEff gemäß dem vorstehend beschriebenen Ausführungsbeispiel.

In dieser Ausführung wird bei einem positiven Vergleichsergebnis im Verfahrensschritt 90 ein Verfahrensschritt 100 gestartet, bei welchem überprüft wird, ob die aktuelle Ist-Betriebsart ActMode gleich der Soll-Betriebsart DesMode beziehungsweise gleich dem Wandlerbetrieb 52 ist. Ergibt sich im Verfahrensschritt 100 ein negatives Vergleichsergebnis wird in einem Verfahrensschritt 102 die Variable DesModeEff auf den Wandlerbetrieb 52 gesetzt. Bei einem positiven Vergleichsergebnis im Verfahrensschritt 100 werden in einem Verfahrensschritt 104 die Zeitdauern tHPM und tLPM eingestellt. Anschließend werden in einem Verfahrensschritt 106 die Energiewerte eLPM und eHPM berechnet und miteinander verglichen. Bei dem Vergleich wird eine Energiehysterese eHyst berücksichtigt, um ein zu häufiges Umschalten zwischen den Betriebsarten 52, 54 zu unterdrücken. Insbesondere wird hierbei ein Vergleich durchgeführt ob der Energiewert eLPM kleiner als die Differenz aus dem Energiewert eHPM und der Energiehysterese eHyst ist. Bei einem positiven Vergleich wird in einem Verfahrensschritt 108 die Variable DesModeEff auf den Bypassbetrieb 54 gesetzt. Bei einem negativen Vergleichsergebnis wird der Verfahrensschritt 102 ausgeführt.

Im Falle eines negativen Vergleichsergebnis im Verfahrensschritt 90 wird ein Verfahrensschritt 110 gestartet, bei welchem überprüft wird, ob die aktuelle Ist-Betriebsart ActMode gleich dem Bypassbetrieb 54 ist. Ergibt sich im Verfahrensschritt 110 ein negatives Vergleichsergebnis wird in einem Verfahrensschritt 112 die Variable DesModeEff auf den Bypassbetrieb 54 gesetzt. Bei einem positiven Vergleichsergebnis im Verfahrensschritt 110 werden in einem Verfahrensschritt 114 die Zeitdauern tHPM und tLPM eingestellt. Anschließend werden in einem Verfahrensschritt 116 die Energiewerte eLPM und eHPM berechnet und miteinander verglichen. Insbesondere wird hierbei ein Vergleich durchgeführt ob der Energiewert eLPM größer als die Summe aus dem Energiewert eHPM und der Energiehysterese eHyst ist. Bei einem positiven Vergleich wird in einem Verfahrensschritt 118 die Variable DesModeEff auf den Wandlerbetrieb 52 gesetzt. Bei einem negativen Vergleichsergebnis wird der Verfahrensschritt 112 ausgeführt.

Alternativ ist es in den Verfahrensschritten 106 und 116 möglich, auf die Energiehysterese eHyst zu verzichten, da bereits durch die Schaltzeit TSwitch eine gewisse Hysterese in die zu vergleichenden Rekuperationspotentiale eingebracht wird, sodass die zusätzliche Hysterese eHyst nicht zwingend notwendig ist.

Durch die Berücksichtigung eines bidirektionalen Umschaltens zwischen den Betriebsarten 52 und 54 wird verbesserte Performance des Kraftfahrzeugs 2 aufgrund der verbesserten Variabilität und Flexibilität erreicht.

Das vorstehend anhand der Figuren 3 bis 9 beschriebene Verfahren wird vorzugsweise von einem Controller 120 des Kraftfahrzeugs 2 ausgeführt (Fig. 1). Mit anderen Worten wird der Fahrbetrieb des Kraftfahrzeugs 2 von dem Controller 120 gesteuert und/oder geregelt. Der Controller 120 weist hierbei beispielsweise einen Datenspeicher auf, auf welchem eine Betriebssoftware hinterlegt ist, in welcher das Verfahren programmtechnisch implementiert ist.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

**Bezugszeichenliste**

| | |
|---|---|
| 2 | Kraftfahrzeug |
| 4 | Zugfahrzeug |
| 6 | Anhänger |
| 8 | Fahrzeugrahmen |
| 10 | Fahrzeugkabine |
| 12 | Fahrzeugaufbau |
| 14 | Antriebsstrang |
| 16 | Oberleitung |
| 18 | Fahrbahn |
| 20 | Fahrzeugbatterie |
| 22 | Stromabnehmer |
| 24 | Fahrzeugdach |
| 26 | Antriebsmaschine |
| 28 | Hochvoltverbraucher |
| 30 | Bordnetz |
| 32 | Batterieschalter |
| 34 | Wandlerleitung |
| 36 | Gleichspannungswandler |
| 36a | Anschlussseite/Eingangsseite |
| 36b | Anschlussseite/Ausgangsseite |
| 38 | Bypassleitung |
| 40 | Bypassschalter |
| 42 | Stromabnehmerschütz |
| 44 | Batterieschütz |
| 46 | Wechselrichter |
| 48 | Elektromotor/Elektromaschine |
| 50 | Betriebsart/Batteriebetrieb |
| 52 | Betriebsart/Wandlerbetrieb |
| 54 | Betriebsart/Bypassbetrieb |
| 56, 58 | Abschnitt |
| 60 | Eingangsbedingung |
| 61, 62, 64, 65 | Aktion |
| 66 | Übergangsbedingung |
| 67, 68, 70, 71 | Aktion |
| 72, 74 | Übergangsbedingung |

| 75, 76, 78, 79 | Aktion |
| 80 | Übergangsbedingung |
| 81 | Verfahrensstart |
| 82 bis 118 | Verfahrensschritt |
| 120 | Controller |
| | |
| vVeh | Fahrzeuggeschwindigkeit |
| vThreshold | Geschwindigkeitsschwellwert |
| vHyst | Geschwindigkeitshysterese |
| IB | Batteriestrom |
| UB | Batteriespannung |
| IE | Eingangsstrom/Generatorstrom |
| UE | Eingangsspannung/Generatorspannung |
| IP | Stromabnehmerstrom |
| UP | Stromabnehmerspannung |
| ID1, ID2 | Wandlerstrom |
| UD | Wandlerspannung |
| TSwitch | Umschaltzeit |
| DesModeEff | Variable |
| DesMode | Soll-Betriebsart |
| ActMode | Ist-Betriebsart |
| mEMDes | Drehmoment |
| t | Zeit |
| t0, t1, t2, t3, t4 | Zeitpunkt |
| tHPM, tLPM | Zeitdauer |

**Patentansprüche**

1. Verfahren zum Betrieb eines elektrisch angetriebenen oder antreibbaren Kraftfahrzeugs (2) aufweisend einen Stromabnehmer (22) zur Kontaktierung mit einer oberhalb einer Fahrbahn (18) verlaufenden Oberleitung (16), und einen mit dem Stromabnehmer (22) gekoppelten Antriebsstrang (14), wobei während eines Oberleitungsbetriebs, bei welchem der Stromabnehmer (22) mit der Oberleitung (16) kontaktiert ist, zwischen einem Wandlerbetrieb (52), bei welchem elektrische Energie über einen zwischen dem Stromabnehmer (22) und den Antriebsstrang (14) geschalteten Gleichspannungswandler (36) geführt wird, und einem Bypassbetrieb (54), bei welchem elektrische Energie über eine dem Gleichspannungswandler (36) parallel geschaltete Bypassleitung (38) geführt wird, in Abhängigkeit einer Fahrzeuggeschwindigkeit (vVeh) und eines berechneten Rekuperationspotentials umgeschaltet wird,

   - wobei anhand einer Fahrprofilvorausschau ein Drehmoment (mEMDes) eines Elektromotors (48) des Antriebsstrangs (14) für eine vorhergesagte Zeit (tP) prognostiziert wird,
   - wobei bei einem negativen Drehmoment (mEMDes) für die vorhergesagte Zeit (tP) eine erste Energiemenge (eLPM) einer zu erwartenden Rekuperationsenergie für den Wandlerbetrieb (52) und eine zweite Energiemenge (eHPM) einer zu erwartenden Rekuperationsenergie für den Bypassbetrieb (eHPM) bestimmt wird,
   - wobei ein Startzeitpunkt für die Energiemengenberechnung in Abhängigkeit der jeweiligen Ist-Betriebart mit einer Umschaltzeit (TSwitch) für das Umschalten in die jeweils andere Betriebsart angepasst wird,
   - wobei die Energiemengen (eLPM, eHPM) miteinander verglichen werden,
   - wobei von dem Wandlerbetrieb (52) auf den Bypassbetrieb (54) umgeschaltet wird, wenn die Fahrzeuggeschwindigkeit (vVeh) größer als ein erster Geschwindigkeitsschwellwert ist, und wenn das Rekuperationspotential für den Bypassbetrieb (54) energetisch günstiger als für den Wandlerbetrieb (52) ist, und
   - wobei von dem Bypassbetrieb (54) auf den Wandlerbetrieb (52) umgeschaltet wird, wenn die Fahrzeuggeschwindigkeit (vVeh) kleiner als ein zweiter Geschwindigkeitsschwellwert ist, oder wenn das Rekuperationspotential für den Wandlerbetrieb (52) energetisch günstiger als für den Bypassbetrieb (54) ist.

2. Verfahren nach Anspruch 1,
   **dadurch gekennzeichnet,**
   **dass** die Fahrprofilvorausschau anhand von Navigationsdaten und/oder Fahrzeugdaten und/oder Verkehrsdaten bestimmt wird.

**3.** Verfahren nach Anspruch 1 oder 2,
**dadurch gekennzeichnet,**
**dass** bei dem Vergleich der Energiewerte (eLPM, eHPM) ein Wert für eine Energiehysterese (eHyst) berücksichtigt wird.

**4.** Elektrisch angetriebenes oder antreibbares Kraftfahrzeug (2) aufweisend

- einen Stromabnehmer (22) zur Kontaktierung mit einer oberhalb einer Fahrbahn (18) verlaufenden Oberleitung (16), und
- einen mit dem Stromabnehmer (22) gekoppelten Antriebsstrang (14), sowie
- einen zwischen dem Stromabnehmer (22) und den Antriebsstrang (14) geschalteten oder schaltbaren Gleichspannungswandler (36), und
- einen parallel zum Gleichspannungswandler (36) geschaltete oder schaltbare Bypassleitung (38), sowie
- einen Controller (120) zur Durchführung eines Verfahrens nach einem der Ansprüche 1 bis 3.

**5.** Software auf einem Datenträger, umfassend Befehle, die bei der Ausführung durch den Controller eines Kraftfahrzeugs nach Anspruch 4 diesen veranlassen, das Verfahren nach einem der Ansprüche 1 bis 3 auszuführen.

**Claims**

**1.** A method for operating an electrically driven or drivable motor vehicle (2) comprising a current collector (22) for contacting an overhead line (16) extending above a roadway (18), and a drive train (14) coupled to the current collector (22), wherein during an overhead-line operation in which the current collector (22) is in contact with the overhead line (16), a switch is made, according to a vehicle speed (vVeh) and a calculated recuperation potential, between a converter operation (52), in which electrical energy is conducted via a DC voltage converter (36) connected between the current collector (22) and the drive train (14), and a bypass operation (54), in which electrical energy is conducted via a bypass line (38) connected in parallel with the DC voltage converter (36),

- wherein a torque (mEMDes) of an electric motor (48) of the drive train (14) is predicted for a predicted time (tP) on the basis of a driving profile preview,
- wherein, in the case of a negative torque (mEMDes) for the predicted time (tP), a first energy amount (eLPM) of a recuperation energy to be expected for the converter operation (52) and a second energy amount (eHPM) of a recuperation energy to be expected for the bypass operation (eHPM) are determined,
- wherein a starting time for the energy amount calculation is adjusted on the basis of the relevant actual mode of operation with a switching time (TSswitch) for switching into the respective other mode of operation,
- wherein the energy amounts (eLPM, eHPM) are compared with one another,
- wherein a switch is made from the converter operation (52) to the bypass operation (54) if the vehicle speed (vVeh) is greater than a first speed threshold value and if the recuperation potential for the bypass operation (54) is more energy-efficient than for the converter operation (52), and
- wherein a switch is made from the bypass operation (54) to the converter operation (52) if the vehicle speed (vVeh) is less than a second speed threshold value or if the recuperation potential for the converter operation (52) is more energy-efficient than for the bypass operation (54).

**2.** The method according to claim 1,
**characterized in that**
the driving profile preview is determined on the basis of navigation data and/or vehicle data and/or traffic data.

**3.** The method according to claim 1 or 2,
**characterized in that**
when comparing the energy values (eLPM, eHPM), a value for energy hysteresis (eHyst) is taken into account.

**4.** An electrically driven or drivable motor vehicle (2) comprising

- a current collector (22) for contacting an overhead line (16) extending above a roadway (18), and
- a drive train (14) coupled to the current collector (22), and
- a DC voltage converter (36) connected or connectable between the current collector (22) and the drive train (14), and

- a bypass line (38) connected or connectable in parallel with the DC voltage converter (36), and
- a controller (120) for implementing a method according to one of claims 1 to 3.

5. A piece of software on a data carrier, comprising instructions which, when executed by the controller of a motor vehicle according to claim 4, cause said vehicle to execute the method according to one of claims 1 to 3.

**Revendications**

1. Procédé pour faire fonctionner un véhicule automobile (2) entraîné ou pouvant être entraîné électriquement, présentant un collecteur de courant (22) pour la mise en contact avec une ligne aérienne (16) s'étendant au-dessus d'une voie de circulation (18) et un groupe motopropulseur (14) accouplé au collecteur de courant (22), dans lequel, pendant une exploitation de ligne aérienne, pendant laquelle le collecteur de courant (22) est en contact avec la ligne aérienne (16), une commutation est effectuée entre une exploitation de convertisseur (52), pendant laquelle de l'énergie électrique est guidée par le biais d'un convertisseur CC (36) connecté entre le collecteur de courant (22) et le groupe motopropulseur (14) et une exploitation de dérivation (54), pendant laquelle de l'énergie électrique est guidée par le biais d'une conduite de dérivation (38) connectée en parallèle avec le convertisseur CC (36), en fonction d'une vitesse de véhicule (vVeh) et d'un potentiel de récupération calculé,

   - dans lequel à l'aide d'une prévision de profil de conduite, un couple (mEMDes) d'un moteur électrique (48) du groupe motopropulseur (14) est prévu pour un temps prédit (tP),
   - dans lequel en cas de couple négatif (mEMDes) pour le temps prédit (tP), une première quantité d'énergie (eLPM) d'une énergie de récupération escomptée pour l'exploitation de convertisseur (52) et une seconde quantité d'énergie (eHPM) d'une énergie de récupération escomptée pour l'exploitation de dérivation (eHPM), sont déterminées,
   - dans lequel un point de départ pour le calcul de quantité d'énergie est adapté en fonction du mode d'exploitation réel respectif avec un temps de commutation (TSwitch) pour la commutation dans l'autre mode d'exploitation respectif,
   - dans lequel les quantités d'énergie (eLPM, eHPM) sont comparées l'une à l'autre,
   - dans lequel une commutation est effectuée de l'exploitation de convertisseur (52) vers l'exploitation de dérivation (54), lorsque la vitesse de véhicule (vVeh) est supérieure à une première valeur seuil de vitesse et lorsque le potentiel de récupération pour l'exploitation de dérivation (54) est énergiquement plus favorable que pour l'exploitation de convertisseur (52), et
   - dans lequel une commutation est effectuée de l'exploitation de dérivation (54) vers l'exploitation de convertisseur (52) lorsque la vitesse de véhicule (vVeh) est inférieure à une seconde valeur seuil de vitesse ou lorsque le potentiel de récupération pour l'exploitation de convertisseur (52) est énergiquement plus favorable que pour l'exploitation de dérivation (54).

2. Procédé selon la revendication 1,
   **caractérisé en ce**
   **que** la prévision de profil de conduite est déterminée à l'aide de données de navigation et/ou de données de véhicule et/ou de données de circulation.

3. Procédé selon la revendication 1 ou 2,
   **caractérisé en ce**
   **que**, lors de la comparaison des valeurs d'énergie (eLPM, eHPM), une valeur pour une hystérésis d'énergie (eHyst) est prise en compte.

4. Véhicule automobile entraîné ou pouvant être entraîné électriquement (2) présentant

   - un collecteur de courant (22) pour la mise en contact avec une ligne aérienne (16) s'étendant au-dessus d'une voie de circulation (18) et
   - un groupe motopropulseur (14) accouplé au collecteur de courant (22), ainsi que
   - un convertisseur CC (36) connecté ou pouvant être connecté entre le collecteur de courant (22) et le groupe motopropulseur (14) et
   - une conduite de dérivation (38) connectée ou pouvant être connectée en parallèle avec le convertisseur CC (36) et
   - un contrôleur (120) pour la réalisation d'un procédé selon l'une quelconque des revendications 1 à 3.

**5.** Logiciel sur un support de données, comprenant des instructions qui, lors de la réalisation par le contrôleur d'un véhicule automobile selon la revendication 4, permettent à celui-ci de réaliser le procédé selon l'une quelconque des revendications 1 à 3.

FIG. 1

EP 3 848 229 B1

FIG. 2

EP 3 848 229 B1

FIG. 3

FIG. 4

FIG. 5

FIG. 7

FIG. 6

FIG. 8

81

set(DesModeEff=LPM) — 82

DesMode>=LPM?   no
84

yes

mEMDes>0?   no
86

yes

DesMode==LPM?   no
90

yes

eLPM>eHPM   no
94

yes

set(DesModeEff=HPM)      set(DesModeEff=LPM)      set(DesModeEff=LPM)      set(DesModeEff=HPM)

88            92            96            98

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3036127 B1
- EP 3212455 A1
- EP 3030440 A1